# EUROPEAN PATENT APPLICATION

(11) **EP 4 714 776 A2**
(43) Date of publication of application: **25.03.2026**
(21) Application number: 25204129.8
(22) Date of filing: 23.09.2025
(51) Int. Cl.: B61D 15/10

(54) **MOBILE PLATFORM AND SYSTEM FOR POWERING RAIL OPERATIONS**

(30) Priority: 23.09.2024 US 202418893866
(71) Applicant: Transportation IP Holdings, LLC, Norwalk, CT 06851 (US)
(72) Inventor: Nye, Aaron, Erie (US); Franco, Adam, Erie (US); Karunaratne, Milan, Erie (US)
(74) Representative: K&L Gates LLP

(57) **Abstract**

A mobile platform includes a frame, drive wheels, an energy storage device, and an energy interface device. The drive wheels that support the frame propel the mobile platform on rails along a path without contacting other vehicles that travel along the same path in the same direction, in the opposite direction, or while one of the mobile platform or the other vehicle is stationary. The energy storage device is supported by the frame. The energy interface device is configured to transfer energy to and/or from the energy storage device and an offboard energy device.

## Description

### BACKGROUND

### Technical Field

The subject matter described herein relates to a mobile platform and system for powering rail operations.

### Discussion of Art

A railroad switch is a fundamental part of the railway infrastructure that guides trains from one track to another to allow for diverging from a single track to two or more tracks, converging from multiple tracks to a single track, bypassing occupied track, and the like. The ability to move the switch rails can be done through manual or automated means. For manual means, the switch rails are moved via a switch lever that is physically thrown by a human. For automated means, the switch rails are moved via an actuated switch machine that is powered from an energy source and can be controlled either locally or remotely. Switch machines are typically accompanied by some means of contact detection to ensure proper/safe switch rail alignment, particularly when under remote control.

The cost associated with installing an automated switch (that is, a switch machine) is much greater than the cost of installing a manual switch (that is, a switch lever). The majority of this cost difference is associated with delivering energy to the switch machine from an energy source, which in most cases is through electrical energy via underground wiring that is connected to an electrical grid. To provide electrical energy to the switch machine, electrical infrastructure must be installed near the switch(es), i.e., transformers, inverters, fuse panels, and the like, with trenches being excavated and underground conduit and wiring installed/buried to connect the available electrical energy to the switch machine. Because of the higher cost of installing switch machines, many switches that are used infrequently or are regularly accessible by humans (for example, switches located in switching yards) remain as manual switches.

A need exists for a more economical solution for automating switch machines that reduces the labor and equipment cost associated with energizing a switch machine by utilizing energy from a non-wired external energy source.

Railroad yards, specifically switching yards (or classification yards), are used to separate railcars onto different tracks to make up trains. These switching yards are generally one of three types: gravity yards, hump yards, or flat yards. Flat yards are sufficiently flat that railcars will not move without the aid, such as that of a locomotive.

While hump yards are already almost fully automated, flat yards and the so-called last mile operations (or road operations) are managed manually since several technical and economic barriers make automation very difficult to implement.

Movement of railcars, for example, freight cars, in flat yards requires several operations to be performed by shunting locomotives. The position of a given railcar often requires the shunting locomotive to first move other railcars to reach the given railcar and bring that railcar to a destination. Having railcars able to move without the aid of a locomotive to reach their assigned place or to free a route to be used by other railcars would be advantageous.

Further, there is a worldwide demand from freight operators for switching yard automation to reduce risks associated to the staff operating in the switching yards (many serious injuries and even deaths happen every year in switching yards around the world) and to improve throughput.

One technical barrier to automating switching yard operations concerns positioning of railcars. While locomotives can be easily equipped with devices such as a GPS receiver, odometers, radios, and the like, plus all the electronics necessary to process data, to equip freight cars with devices to determine their exact position in a switching yard is inefficient.

The exact position of the railcars in the switching yard (with at least enough precision able to discriminate the track on which a railcar is located) is needed to feed artificial intelligence (AI) or machine learning algorithms to plan the optimal shunting movements and to execute them.

A second technical barrier concerns protection during push shunting. There is research activity being performed in the industry to support Automatic Train Operation (ATO) with sensors able to detect obstacles. This research is extremely important for ATO applications in mainline (through train) operations, but not in freight yard (switching yard) automatic shunting operations. The reason for this difference is that in mainline operations, there is always a locomotive pulling the train. Therefore, such a locomotive can be equipped with sensors to detect obstacles.

In a switching yard, a shunting locomotive performs a lot of shunting movement pushing cars: Any sensor installed on the pushing shunting locomotive will be blind (like the shunting locomotive operator (or driver) is in such a situation) and of no use.

This situation is addressed by either adding more personnel or using locomotive remote-control systems. In the former case, personnel on the ground communicate via radio with the shunting locomotive operator and guide the operator. In the latter case, the personnel on the ground directly exercise remote control over the locomotive.

Very often pushing cars happens also in so called "last mile" operations. Last mile operation refer to the movement of a consist of freight cars from one yard to another yard, or from a mainline station to a yard. In several cases, last mile operation is associated with level crossings (that is, grade crossings). These operations require (like in the yard push shunting movement) either additional personnel in the first car able to guide via radio the shunting locomotive operator or personnel equipped with remote control of the shunting locomotive (in which case, one can avoid the presence of an operator in the locomotive cab). The need to have personnel in the first car makes the process time consuming and expensive.

A third technical barrier in the rail yard is automatic coupling and uncoupling. Couplers are different worldwide. Therefore, this barrier has different impacts in different locations.

In some locations, couplers allow automatic coupling, but not uncoupling. In other locations, both coupling and uncoupling are performed manually.

### BRIEF DESCRIPTION

In one or more aspects of the present disclosure, a mobile platform includes: a frame; drive wheels supporting the frame that propel the mobile platform on rails along a path without contacting other vehicles that travel along the same path in the same direction, in the opposite direction, or while one of the mobile platform or the other vehicle is stationary; an energy storage device supported by the frame; and an energy interface device configured to transfer energy to and/or from the energy storage device and an offboard energy device.

In one or more aspects of the present disclosure, a system includes: a mobile platform having a frame, and drive wheels supporting the frame that propel the mobile platform on rails along a path without contacting rail vehicles that travel along the same path in the same direction, in the opposite direction, or one of the mobile platform or the other vehicle is stationary; an energy source supported by the frame; and an energy interface device configured to transfer energy from the energy source to an automatic coupler device that is configured to couple and/or uncouple adjacent rail vehicles when energized via the energy source.

In one or more aspects of the present disclosure, a system includes: a mobile platform having a frame, and drive wheels supporting the frame that propel the mobile platform on rails along a path without contacting rail vehicles that travel along the same path; a energy source; and an engagement device configured to engage a rail vehicle; a control circuit configured to actuate the engagement device to engage the rail vehicle and to cause the rail vehicle to move in a desired direction.

### BRIEF DESCRIPTION OF THE DRAWINGS

FIG. 1 illustrates a mobile platform that may travel along rails of a railway, in accordance with at least one aspect of the disclosure.
FIG. 2 illustrates a support structure, in accordance with at least one aspect of the disclosure.
FIG. 3 illustrates the support roller in a first position.
FIG. 4 illustrates an embodiment of the support roller in a second position.
FIG. 5 is a perspective view of a mobile platform according to an embodiment of the disclosure.
FIG. 6 is a perspective view of a mobile platform according to an embodiment of the disclosure.
FIG. 7 is a side view of the mobile platform of FIG. 6.
FIG. 8 is a perspective view of one of a portion of a frame and one of the articulatable arms of the mobile platform of FIG. 6.
FIG. 9 is a plan view of one of the articulatable arms of the mobile platform of FIG. 6.
FIG. 10 is a plan view of one of the articulatable arms of the mobile platform of FIG. 6.
FIG. 11 is a plan view of one of the articulatable arms of the mobile platform of FIG. 6.
FIG. 12 is a plan view of the mobile platform of FIG. 6.
FIG. 13 is a plan view of the mobile platform of FIG. 6.
FIG. 14 is a perspective view of a portion of the mobile platform of FIG. 6.
FIG. 15 is a side view of the mobile platform of FIG. 14.
FIG. 16 is a plan view of FIG. 15.
FIG. 17 is a plan view of FIG. 15.
FIG. 18 is a plan view of FIG. 15.
FIG. 19 is a plan view of FIG. 15.
FIG. 20 is a schematic of a control circuit for an embodiment of a mobile platform disclosed herein.
FIG. 21 is a perspective view of a mobile platform according to an embodiment of the disclosure.
FIG. 22 is a perspective view of one of the actuatable arms of the vehicle of FIG. 21.
FIG. 23 is a front view of the actuatable arm of FIG. 22.
FIG. 24 is a plan view of the actuatable arm of FIG. 23.
FIG. 25 is a front view of the actuatable arm of FIG. 22.
FIG. 26 is a plan view of the actuatable arm of FIG. 25.
FIG. 27 is a front view of the actuatable arm of FIG. 22.
FIG. 28 is a plan view of the actuatable arm of FIG. 27.
FIG. 29 is a perspective view of the mobile platform of FIG. 21.

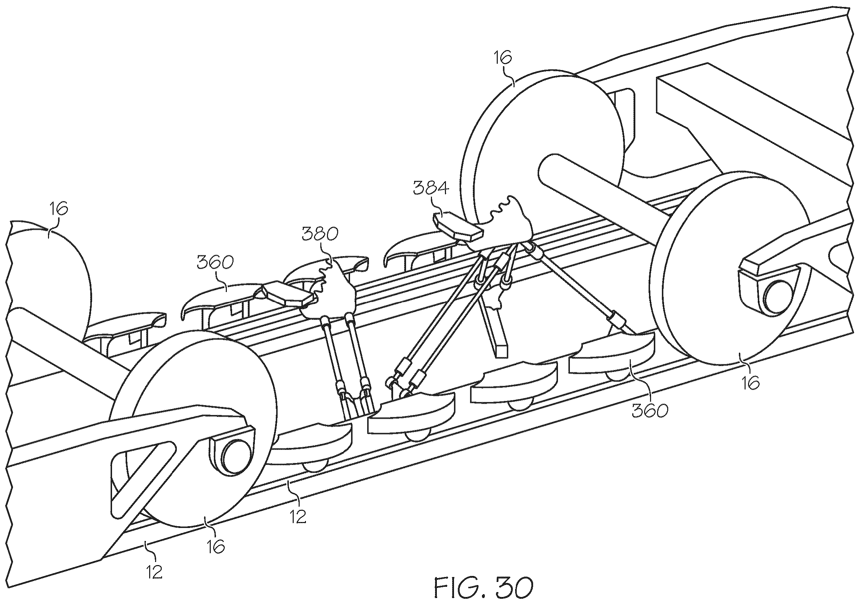

FIG. 30 is a perspective view of the mobile platform of FIG. 21.
FIG. 31 is a simplified side view of a mobile platform in accordance with at least one aspect of the disclosure.
FIG. 32 is a railroad switch system in accordance with at least one aspect of the disclosure.
FIG. 33 is simplified side view of a mobile platform enabling automatic coupling in accordance with at least one aspect of the disclosure.
FIG. 34 is a perspective view of an energy transfer device and an offboard energy device in accordance with at least one aspect of the disclosure.
FIG. 35 is an inductively coupled pair of conductive loops in accordance with at least one aspect of the disclosure.
FIG. 36 is a simplified side view of a mobile platform in accordance with at least one aspect of the disclosure.
FIGS. 37 and 38 are side views of a mobile platform using drive wheels to move a railcar in accordance with at least one aspect of the disclosure.
FIGS. 39 and 40 are side views of a mobile platform using an ancillary motor to mobilize a railcar wheel or axle in accordance with at least one aspect of the disclosure.

### DETAILED DESCRIPTION

As used herein, the term railcar refers generically to any type of railway vehicle, be it self-propelled or not. Thus, a freight car, a passenger car, and the like are considered railcars.

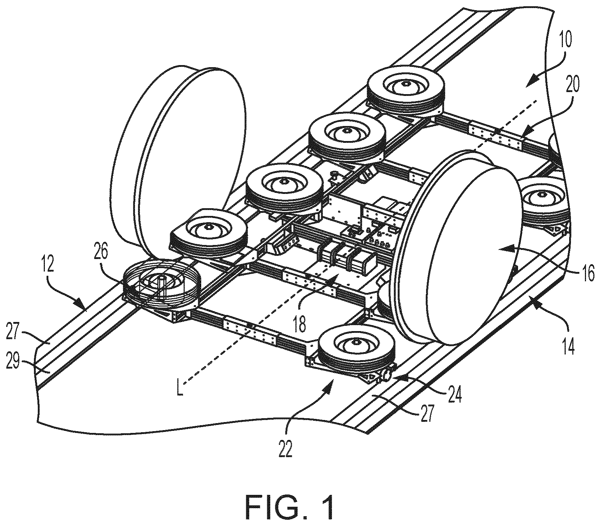

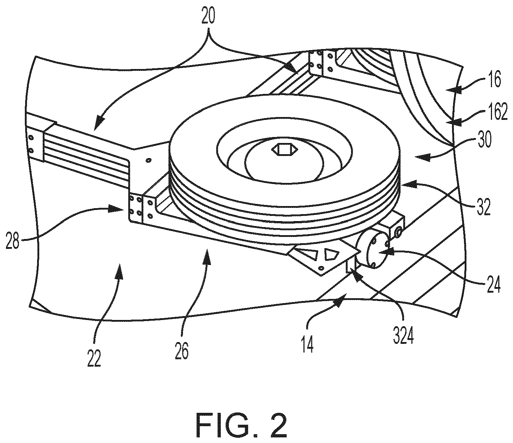

FIG. 1 illustrates a mobile platform 10 that can travel along a first rail 12 and a second rail 14, of a railway track, on which trains and cars may travel, each on multiple sets of wheels 16, which are supported on the rails. The mobile platform may include a frame 20 and support structures 22 distributed to have five support structures on one side of a longitudinal axis L, and another five support structures on the other side thereof. In an alternate embodiment, more than or fewer than five support structures may be distributed on each side of the longitudinal axis. As is seen in FIG. 2, each support structure has a support roller 24 that can engage a top portion 27, or running surface, of the corresponding rail, to support the mobile platform when driving along the track. In an alternative embodiment, the support rollers engage a foot portion 29 (shown in FIG. 1) on the inside of the track to support the mobile platform when driving along the track.

Railway wheels 16 of a railcar are supported on the top of the rails, so that the support rollers 24 cannot easily move along the rails below the railcar. Also, the railway wheels 16 have an inner protrusion 162, extending downwardly, relative to the running surface, from the wheel and on the inner side of the rail 14. The inner protrusion 162 is for ensuring that the train/car/wagon/truck stays on the track, but this protrusion requires the support roller to be removed from engagement with the rail when passing a wheel.

The support structure 22 may include two portions that are movable in relation to each other. A first portion 28 is attached to the frame and a second portion 26 is rotatably connected to the support roller. In this embodiment, the second portion is translatable, perpendicular to the longitudinal axis L in relation to the first portion and the frame, so that the support roller is moved inwardly from the rail to allow the wheel 16 to pass without damaging the support roller 24. The support roller may be moved sufficiently far inwardly to not engage with the wheel. This position is called the second position of this roller, where the position illustrated, with the roller resting on the rail, is called the first position.

A drive 18 may provide motive effort to some of or all of the support rollers to drive the mobile platform along the rails. When a sufficient number of support structures are provided on either side of the longitudinal axis L, the mobile platform is able to move between multiple pairs of wheels while a sufficient number of support rollers engage the rail so that the mobile platform may both remain supported by the rails and be able to move along them while different ones of the support structures bring the individual support rollers from the first position to the second position and back to the first position.

The first and second positions may be defined by the distance from the support roller 24 to the longitudinal axis L, such as when the elements are projected onto a horizonal plane, or a plane defined by the rails. When in the first position, the support rollers are, in the projection, at or on the rails, whereas in the second state, the support rollers are closer to the longitudinal axis L. The threshold distance thus may be any distance between the longitudinal axis L, often between relevant portions of the frame, and the innermost portions of the rails or the railcar wheels on the rails (taking into account the projection).

In FIGS. 1 and 2, a larger wheel, a pusher wheel 32, of the mobile platform is illustrated. The pusher wheel lies above the support roller 24 and extends farther along the directions of the longitudinal axis L. The pusher wheel extends at least as far away from the longitudinal axis L as the support roller. The pusher wheel, in this embodiment, has the operation of moving the support roller from the first position to the second position when a wheel 16 approaches. The pusher wheel engages the approaching wheel and is forced toward the axis L by the approaching wheel. The pusher wheel is mounted on the second portion 26, which is translatable in relation to the first portion and the frame. This translation brings the corresponding support roller away from the rail so that the wheel 16 may pass. When the wheel has passed, the pusher wheel disengages the wheel and thus allows the second portion to extend away from the axis L, allowing the support roller to again be supported by the upper side of the rail. A spring or other resilient means may be provided for biasing the second portion toward having the support roller in the operational position.

In one or more embodiments, the pusher wheel 32 may not be connected directly to the second portion but may be in a geared relationship so that a relatively small displacement of the pusher wheel toward the longitudinal axis L may bring about a larger displacement in the same direction of the support roller 24.

Small rollers 324 may engage the inner surface of the rail. These small rollers 324 are alternatives to projections of the wheels and have the purpose of ensuring that the support rollers 24 do not pass to the inner or outer sides of the rails. In that sense, the small rollers 324 perform a function similar to that of the inner protrusion 162 on wheel 16. Alternatively, projections may be provided as on the wheel 16. The second portions may be biased toward the rail to take into account situations where the distance between the rails 12, 14 varies slightly.

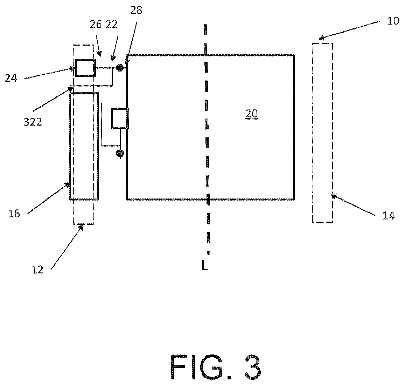

Multiple other manners exist of moving the support roller 24 between the first and second position. Some of these manners are described in relation to FIGS. 3-4.

In FIG. 3, another manner of bringing the support roller 24 from the first position to the second position is illustrated in the mobile platform 10 seen from above. Again, the frame 20 is attached to the support structure 22 having a first portion 28 fixed to the frame and second portion 26 movably, this time rotatably, attached to the first portion 28 and to which the support roller 24 is rotatably attached.

In this embodiment, the second portion is rotatable around a vertical axis as illustrated. The second portion may have a pusher element 322 positioned on the side of the support roller from which the rail vehicle wheel 16 approaches. In FIG. 3, the rail vehicle wheel moves upwardly along the rail.

It is seen that the pusher element 322 will engage the wheel 16 before the wheel reaches the support roller 24 and will push the portion along the direction of travelling, causing the second portion to rotate, as the support structure supports this rotation.

The pusher element 322 will remain between the support roller 24 and the wheel 16 until the wheel is out of engagement, whereafter the second portion will rotate back to the first position.

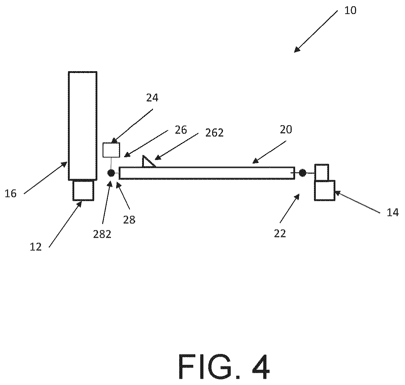

In FIG. 4, a rotation around a horizontal axis brings the support roller 24 from the first position (illustrated to the right) to the second position illustrated to the left.

Above, the manner of bringing the support roller 24 into the second position has been described using direct engagement of a portion of the mobile platform and the approaching train car wheel. Naturally, other manners are useful also, such as a sensor 262 that can sense or detect the arriving wheel 16, such as a position thereof. This sensor may output a signal to a control circuit, which may operate an actuating element 282 that can bring the appropriate support roller 24 into the second position and/or between the first position and the second position. This sensor 262 may be image based, sound based or may be of any other type.

One sensor is not required for each support structure, if the velocity of the wheel is known, relative to the mobile platform, such as if the train car including the wheel is stationary vis-à-vis the rails where the mobile platform may know its own speed vis-à-vis the rails, such as by controlling its drive. In such situations, the position of the wheel vis-à-vis each individual support structure on the same rail may be known over time, so that the wheel may be detected when approaching the mobile platform 10 proper and then, individual support structures may be operated at determined points in time to allow the wheel 16 to pass. This pass event may be accomplished without damage to the mobile platform 10.

In one embodiment, the support roller 24 may have a square cross section in a plane including the axis of rotation. In another embodiment the support roller may have a conical cross section in that plane. This may be relevant, for example, when the translation of FIG. 1 is seen, as the frame and/or portions may not be perfectly stiff, so that the support roller 24 when approaching the rail when being brought back to the first state, may be slightly offset downwardly. In such a situation, the conical shape may assist in ensuring that the support roller again engages the upper side of the rail.

Another reason for having conical support rollers is that the support rollers, when paired with a solid axle or a mechanism that makes left and right support rollers turn at the same rate, keep the frame 20 centered between the rails 12, 14. With cylindrical support rollers, it can be advantageous to actively steer to stay on the rails. With coupled conical support rollers, if the mobile platform 10 starts to deviate to one side, the support roller on that side engages the rail with a larger diameter than the support roller on the other side. Because the two support rollers are coupled, the larger diameter makes the support roller on the side toward which the mobile platform has deviated move farther than the support roller on the other side, steering the mobile platform 10 back to center.

In one embodiment, the control circuit may control the support structures to bring the corresponding support rollers to the second state. When all support rollers go to the second state, the mobile platform will no longer be supported by the rails but may fall to the ground between the rails. This may be a safety feature allowing the mobile platform to remain intact in situations where trains and cars travel on the rails. If, for example, a train is approaching at a speed so fast that the support structures are not able to react sufficiently, this mode may be assumed so that the mobile platform 10 is not destroyed by the train.

In the above embodiments, the mobile platform 10 has been described using support rollers 24. Naturally, alternative types of elements may be used, such as tracks. Also, above, a drive 18 is described as rotating at least some of the support rollers 24 to move the mobile platform 10 along the rails. Clearly, other types of drives may be used, such as drives engaging the wheels, rail vehicles/wagons, the ground or the rails in other manners, so that the support rollers/tracks need not be driven. Actually, the above support rollers 24 may be replaced by other support elements than rollers, such as non-rotating elements, which may slide along the rails 12, 14. Sliding may not even be required, as the mobile platform 10 may be one that can sit in a stationary manner on the tracks where the train/car/wagon/wheels move along the track.

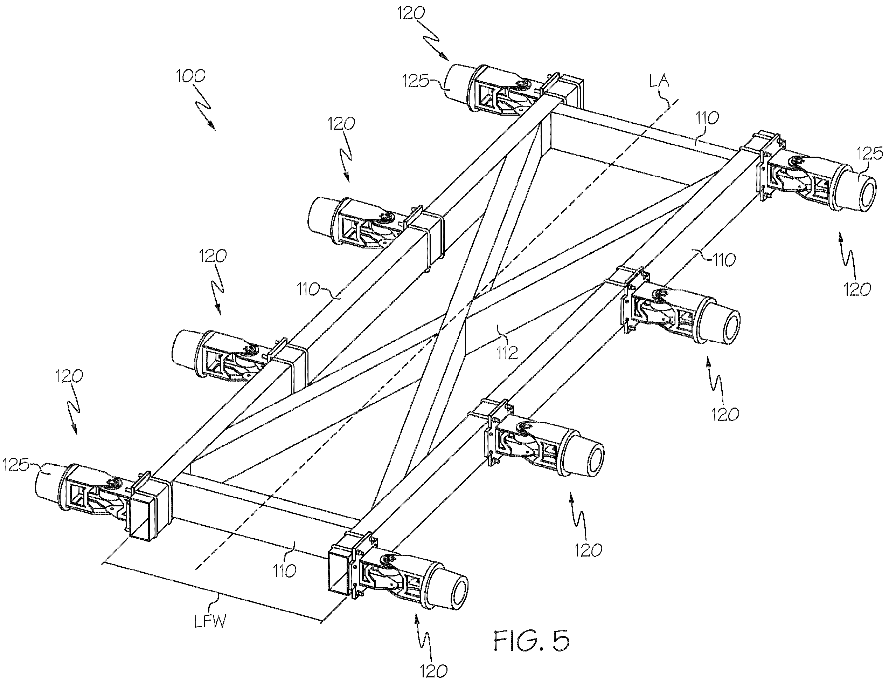

FIG. 5 illustrates a mobile platform 100 for traveling along a railway rail. The mobile platform is capable of traversing underneath of a rail vehicle and/or permitting a rail vehicle to traverse overtop it. The mobile platform may include a frame 110 and a plurality of connection elements, or articulatable arms 120 extending from the frame. The frame defines a lateral frame width LFW that is less than the distance between a pair of rails of a railway, for example. A suitable frame may be rectangular in shape. The frame may have cross bracing 112 to provide rigidity to the frame. In various aspects, the cross bracing may provide mounting locations for various railway maintenance components, as discussed in greater detail elsewhere herein.

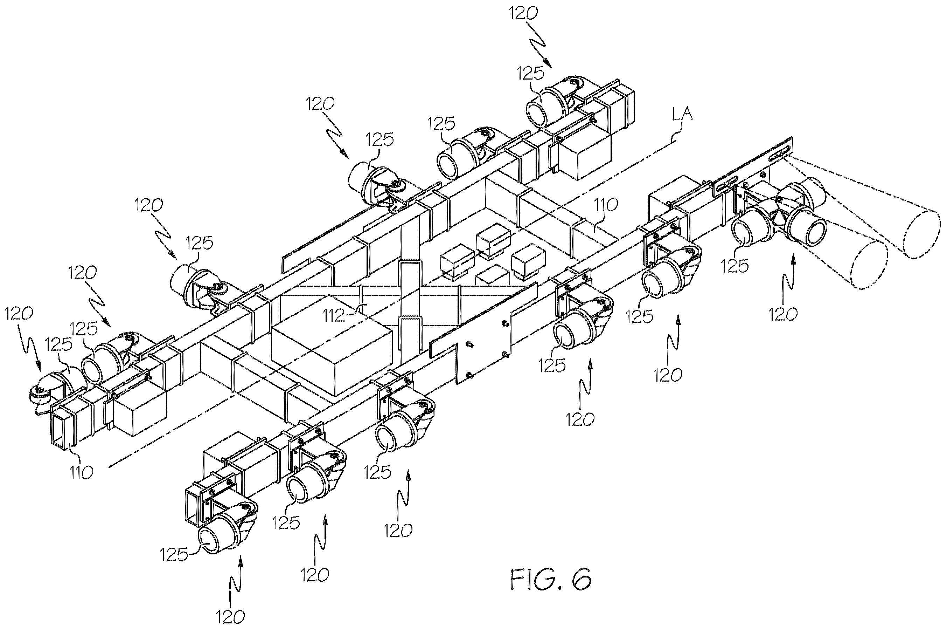

The mobile platform may include eight articulatable arms with four articulatable arms positioned on either side of a longitudinal axis LA defined by the frame. In another embodiment, as illustrated in FIG. 6, a mobile platform 200 may include twelve articulatable arms 120 in six sets with pairs of articulatable arms positioned on either side of the longitudinal axis LA of the frame. In another embodiment, a mobile platform can include at least six articulatable arms with three articulatable arms positioned on either side of the longitudinal axis LA of the frame. In another embodiment, only four arms (e.g., with two on each side of the frame) may be required to traverse underneath of a rail vehicle or for a rail vehicle to traverse overtop the mobile platform due to the staggered nature of the articulatable arms, for example.

In some instances, as shown in FIGS. 5 and 6, each arm is positioned directly across from a corresponding arm on the other side of the frame. Alternatively, the articulatable arms on one side of the frame may be staggered relative to the arms on the other side of the frame. The articulatable arms may positioned in an alternating pattern or a zigzag pattern with respect to the frame.

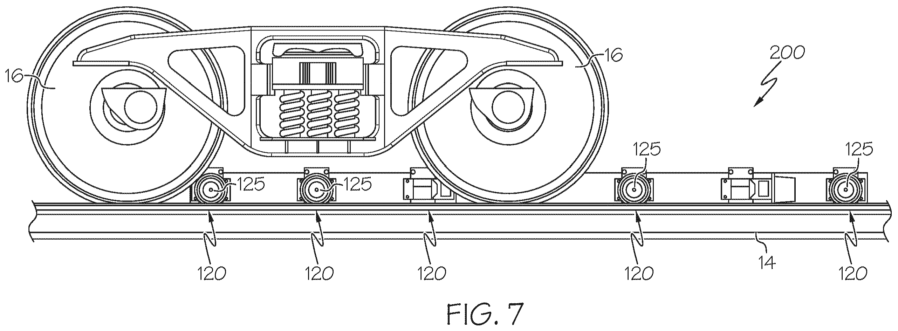

FIG. 7 illustrates the mobile platform 200 positioned on railway rails with wheels 16 of a railcar positioned on the railway rails 14. As discussed in greater detail below, each articulatable arm may include a support element, or flanged wheel 125 connected to the frame by the articulatable arm 120. In a first configuration of the articulatable arm, the flanged wheel is engaged with one of the rails of the railway. In one embodiment, when the flanged wheel is engaged with the rail of the railway, the mobile platform can be driven along the railway when the flanged wheel is rotated about its respective rotation axis by its respective motor. In one embodiment, the flanged wheels engage the top surface, or running surface, of the rail of the railway in the first configuration. In an alternative embodiment, the flanged wheels engage the foot portion 29 of the rail of the railway. As the mobile platform approaches the wheels 16 of the railcar, each of the articulatable arms can be actuated, for example sequentially, to move the flanged wheels 125 out of the path of the railcar and permit the mobile platform to pass along the railway rail 14 underneath the railcar.

The mobile platform may be stationary while the railcar moves toward and traverses across and over the mobile platform. Alternatively, the railcar may be stationary while the mobile platform moves toward and traverses across and under the railcar. Alternatively, the mobile platform and the railcar may both be moving along the rail of the railway in the same direction, or opposite directions, where one traverses the other. In any event, the articulatable arms can be actuated to move the flanged wheels out of the path of the wheels 16 of the railcar to permit non-disruptive movement of the mobile platform and the railcar along the rail of the railway while providing support to the mobile platform to remain supported on the rail of the railway.

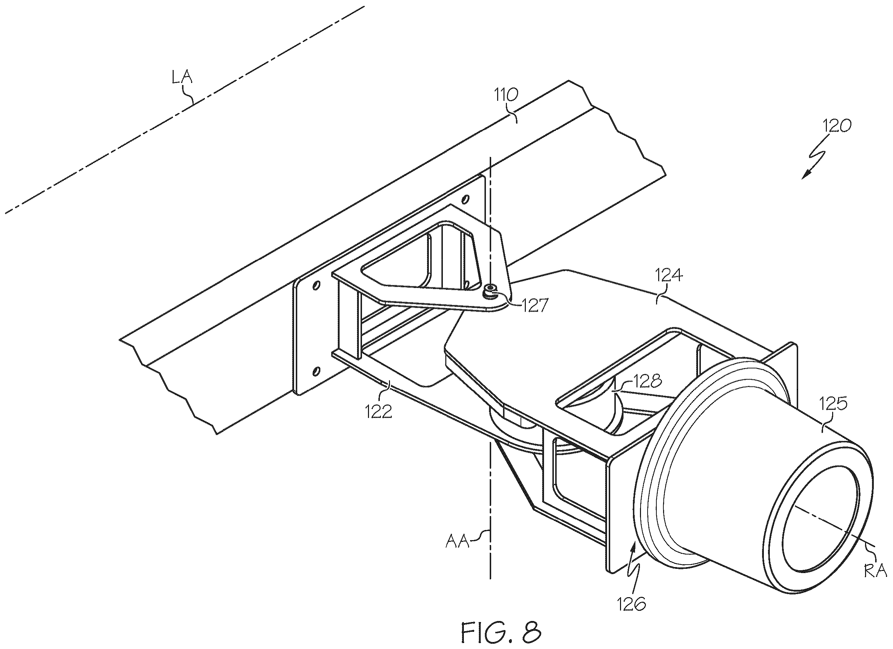

Referring now to FIG. 8, each articulatable arm 120 may include a first joint portion 122 attached to the frame 110 and a second joint portion 124 rotatably attached to the first joint portion about an articulation axis AA. In one embodiment, the first joint portion and the second joint portion are rotatably attached by an articulation pin 127. Further, the flanged wheel 125 is rotatably attached to the second joint portion such that the flanged wheel is rotatable relative to the second joint portion, as well as the first joint portion and the frame, about a rotation axis RA. The articulatable arm may include a motor 126 fixed to the second portion with a rotary element of the motor attached to the flanged wheel such that the motor is that can drive the flanged wheel about the rotation axis RA relative to the second joint portion.

Further to the above, the articulatable arm 120 may include an actuator 128 positioned intermediate the first joint portion and the second joint portion. In other embodiments, the articulatable arm may include a motor or other propulsive device. In one embodiment, the actuator is attached to the first joint portion with a rotatable portion of the actuator, such as an off centered pin, attached to the second joint portion. The actuator is that can rotate the second joint portion and the flanged wheel relative to the first joint portion and the frame 110 about the articulation axis AA.

Alternatively, the motor can be fixed to the frame. The actuator may be powered by the motor or a separate motor. In an embodiment, the actuator acts against a biasing member or spring that can return the second joint to an unarticulated position absent an actuation force.

A plane of articulation about the articulation access is perpendicular to a plane of rotation about the rotation axis RA of the flanged wheel. Accordingly, the plane of articulation is a horizontal plane parallel to the ground. Alternatively, the articulatable arm may be attached to the frame ninety degrees from the orientation shown in FIG. 8 such that the articulation axis AA is parallel to the ground and the plane of articulation is perpendicular to the ground. In an embodiment, the articulatable arm may be attached to the frame in a manner that causes the plane of articulation to define an angle with the ground in a range of from about 0 degrees to about 90 degrees.

Each flanged wheel of each articulatable arm 120 of the plurality of arms is independently and/or selectively actuatable between the engaged position and the disengaged position. Alternatively, two or more of the flanged wheels, as a pair, can be synchronously actuated between the engaged position and the disengaged position.

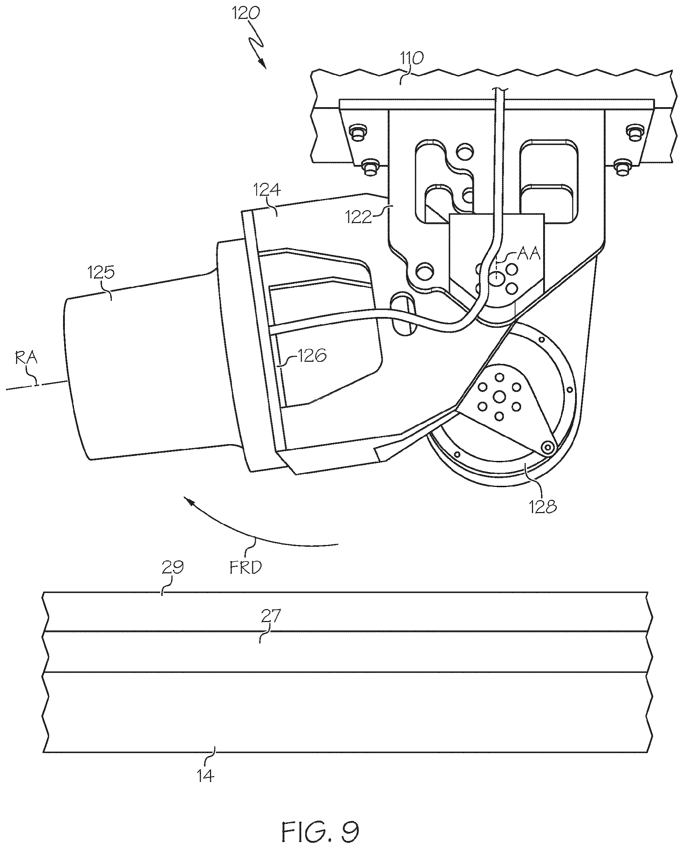

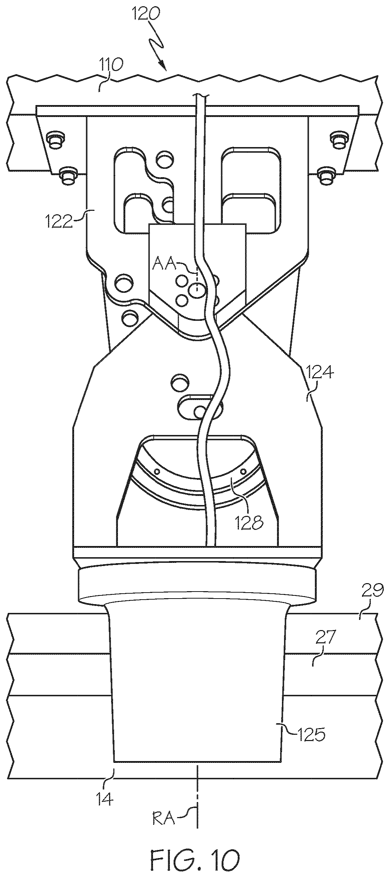

Referring to FIGS. 9-11, one of the articulatable arms is illustrated in various orientations. Specifically, FIG. 10 illustrates the articulatable arm 120 in an unarticulated orientation, in the first configuration, with the flanged wheel 125 in the engaged position resting on the top portion, or resting surface, of the rail of the railway. When the flanged wheel is in the engaged position, the first joint portion and the second joint portion of the articulatable arm are aligned, or substantially aligned, with each other as shown in FIG. 10. In the engaged position, the flanged wheel 125 can provide tractive effort onto the resting surface of the rail 14 in response to an actuation of the motor mounted to the second joint portion of the articulatable arm. In an alternative embodiment, the flanged wheels 125 rests on the foot portion 29 on the inside of the rail 14 of the railway when the articulatable arm 120 is in the unarticulated orientation, in the first configuration, with the flanged wheel 125 in the engaged position. In this engaged position, the flanged wheel 125 can provide tractive effort onto the foot portion 29 of the rail in response to an actuation of the motor mounted to the second joint portion of the articulatable arm.

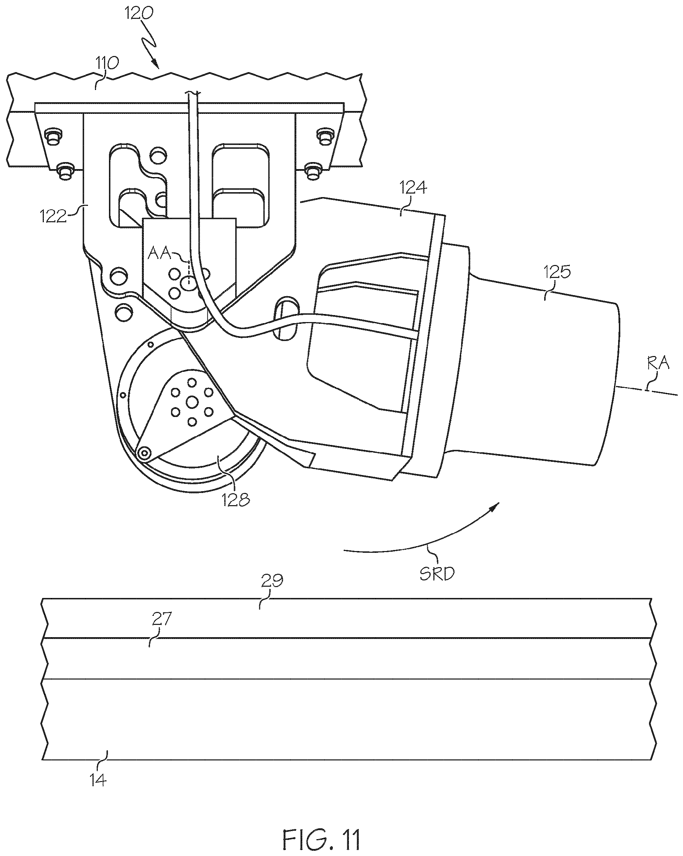

FIGS. 9 and 11 illustrate the articulatable arm 120 in a second configuration with the flanged wheel 125 disengaged from the rail 14 of the railway. In FIGS. 9 and 11, the articulatable arm has been rotated away from the rail of the railway in opposite directions. In FIG. 9, the flanged wheel has been rotated in a first rotational direction FRD from the unarticulated orientation (FIG. 10) to a first articulated orientation. Conversely, in FIG. 11, the flanged wheel has been rotated in a second rotational direction SRD, opposite the first rotational direction FRD, from the unarticulated orientation (FIG. 10) to a second articulated orientation. The first and second articulation orientations are ninety-degree articulation orientation, in opposite directions. Alternatively, the first and second articulation orientations can define any angle suitable to disengage the flanged wheel 125 from the rail 14 to clear the wheel 16 of the railcar. In some aspects, the angle is selected from a range of about 30 degrees to about 90 degrees, for example.

In various aspects, the flanged wheel 125 of the articulatable arms 120 can be drivingly rotated about its respective rotation axes RA in both the first configuration and the second configuration. In such instances, when the flanged wheel is transitioned from a disengaged position (e.g., FIG. 9 or 11) to the engaged position (e.g., FIG. 10), the rotation of the flanged wheel about axis RA may help reengage the flanged wheel with the rail of the railway.

As discussed above, the mobile platform may be stationary with the railcar passing by the vehicle. When the mobile platform is stationary, the flanged wheels are not actively rotating about their respective rotation axes. As such, when the articulatable arm actuates to move the flanged wheel out of the path of the wheel of the railcar, the flanged wheel may be actively braked by the motor of the articulatable arm to prevent the mobile platform from moving along to the railway. In another aspect, the flanged wheels may be free to rotate about their respective rotation axes even when the mobile platform is stationary (e.g., the flanged wheels are not being actively braked or actively rotated by their respective motors).

Further to the above, in one embodiment, the flanged wheels may be conical in shape, e.g. tapering smaller further away from the frame. In such instances, the conical shape can provide a ramping effect to help the flanged wheel reengage the rail of the railway when transitioning from the second configuration to the first configuration.

As discussed above, the articulatable arm may be attached to the frame ninety degrees from the orientation shown in FIG. 8. In such instances, the actuator of the articulatable arm can be actuated with the flanged wheels in the engaged position to lift the frame of the mobile platform relative to the rail of the railway. When some, if not all, of the articulatable arms are actuated in this manner, the frame of the mobile platform can be lifted up high enough to clear street crossings, railway switches, or other obstacles in between the rails of the railway. Further, in one embodiment, the articulatable arm can be actuated with the flanged wheel in the engaged position to drop the frame of the mobile platform down in between the rails of the railway to avoid low hanging portions of a railcar above the frame of the mobile platform, for example. In one embodiment, actuation in this manner may be utilized to completely disengage the flanged wheels of the mobile platform from the rails to allow the entirety of the mobile platform to be positioned below the resting surface of the rails of the railway.

Further to the above, a linear actuator may be positioned between the articulatable arms and the frame of the mobile platform. In one embodiment, the linear actuator is mounted to the frame with an actuatable portion attached to the articulatable arm. In such instances, the linear actuator can be actuated to move the entirety of the articulatable arm up and down relative to the frame (i.e., orthogonal to the longitudinal axis of the frame). In various aspects, the linear actuator permits the frame of the mobile platform to be raised up or down relative to the rails of the railway to avoid objects that may be in the path of the mobile platform. For example, the linear actuator may be used to lift the frame of the mobile platform high enough to clear street crossings, railway switches, or other obstacles in between the rails of the railway. Moreover, the linear actuator may be used to drop the frame down in between the rails of the railway to avoid a low railcar, for example.

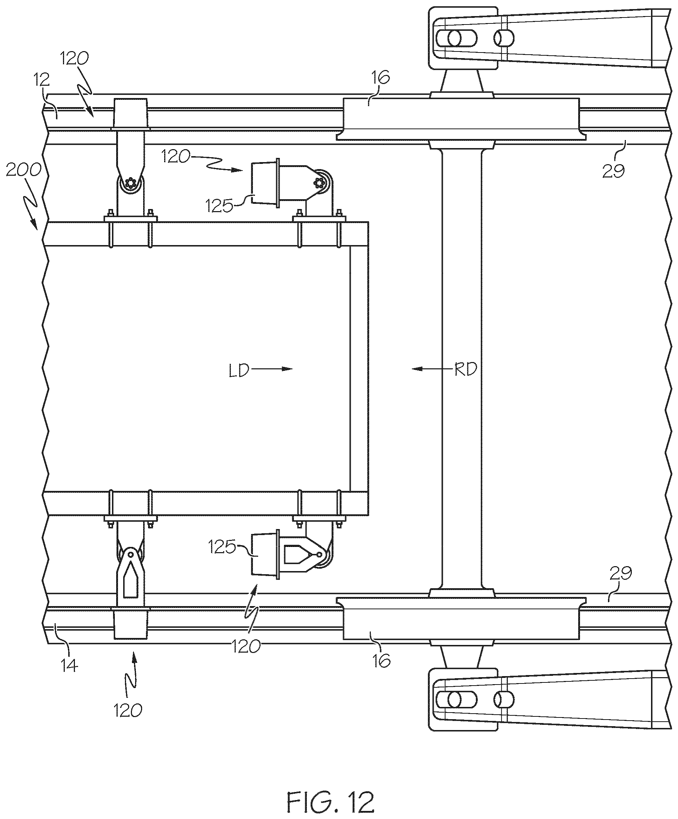

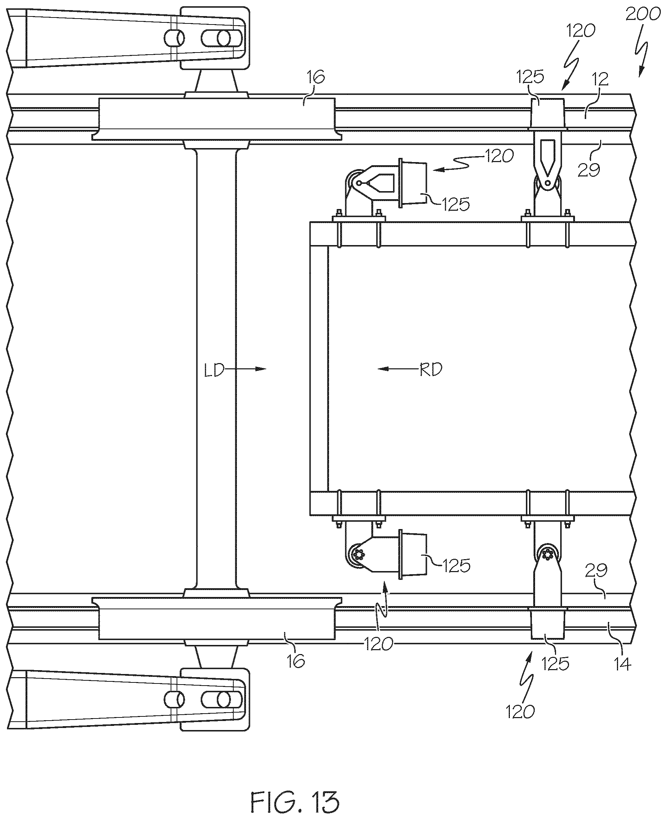

In one embodiment, each of the articulatable arms is that can be actuated to move the flanged wheel from the engaged position toward the disengaged position in a direction that is away from the wheel of the railcar no matter the relative movement directions between the mobile platform and the wheel. For example, referring to FIG. 12, when the mobile platform 200 approaches a stationary wheel from left direction LD, the flanged wheels on either side of the frame can be rotated out of the path of the wheel of the railcar in a direction that is away from the wheel of the railcar. Similarly, if the rail vehicle wheel approaches the stationary mobile platform from the right direction RD, the flanged wheels on either side of the frame can be rotated out of the path of the wheel of the railcar in a direction that is away from the wheel of the railcar. Similarly, the rotation direction is away from the rail vehicle wheel when the mobile platform approaches a stationary railcar wheel 16 from the right direction RD or when the rail vehicle wheels approach a stationary vehicle from the left direction LD, see FIG. 13.

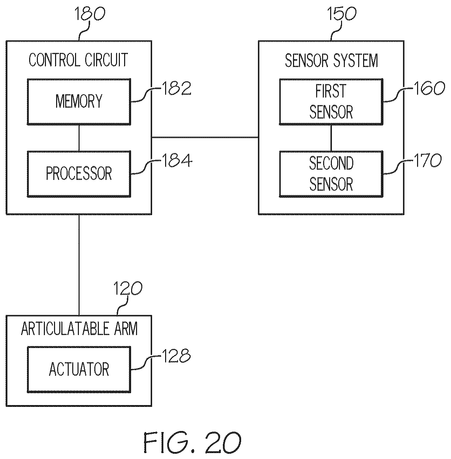

In various aspects, the direction of rotation of each of the flanged wheels may be away from the wheels of the railcar when both the mobile platform and railcar wheels are moving along the rail of the railway relative to each other. In one embodiment, the direction of rotation of the flanged wheel being away from the wheel of the railcar may provide additional time for actuation of the articulatable arm to occur to prevent the flanged wheel from interfering with the wheel of the railcar, e.g., as compared to the flanged wheel rotating toward an approaching wheel of the railcar, or vice versa. Accordingly, the direction of rotation can be selectively determined by a control circuit (FIG. 20) to increase the time available for actuation of the articulation arm to move the flanged wheel away from the rail without, or with minimal, interference with the wheel of the railcar.

In use, when the articulatable arm approaches a wheel of a rail vehicle, or vice versa, the actuator of the articulatable arm is actuated to transition the flanged wheel of the articulatable arm from an engaged position (e.g., FIG. 10) to a disengaged position (e.g., FIG. 9 or 11). Each articulatable arm may be selectively (e.g., sequentially) actuated as the oncoming wheel is detected. In various aspects, while one articulatable arm is actuated to its second configuration to avoid the wheel of the railcar, the remaining articulatable arms can remain in their first configurations with the flanged wheels engaged with the rail to support the vehicle on the rail of the railway. In one embodiment, the frame of the mobile platform is positioned the same vertical distance relative to the pair of rails of the railway as each of the articulatable arms are selectively (e.g., sequentially) transitioned between the first configuration and the second configuration as the mobile platform passes underneath the railcar, or as the railcar passes overtop the vehicle.

In one embodiment, the frame of the mobile platform may sag slightly in the region of two opposing articulation arms when the two opposing articulation arms are moved into their respective second configurations at the same time. In such instances, the other articulations arms, in their first configurations, support the mobile platform so that the frame does not fall in between the rails to enable the two opposing flanged wheels to reengage the rails of the railway once the wheel of the railcar passes by. In the event that the frame sags slightly in the region of opposing articulation arms in their second configurations, the flanged wheel of each articulation arm may be drivingly rotated about their respective rotation axes to assist in re-engaging the rail of the railway when the articulatable arm is moved from the second configuration back into the first configuration. Moreover, the flanged wheels may be conical in shape which can aid the flanged wheel to reengage the rail of the railway when the articulatable arm is moved from the second configuration to the first configuration.

In various aspects, the actuation of the actuator may be initiated by a sensor, or other detection system, which detects the presence of a wheel, or wheels, of a railcar in the path of the flanged wheel in close proximity to the flanged wheel, as discussed in greater detail below.

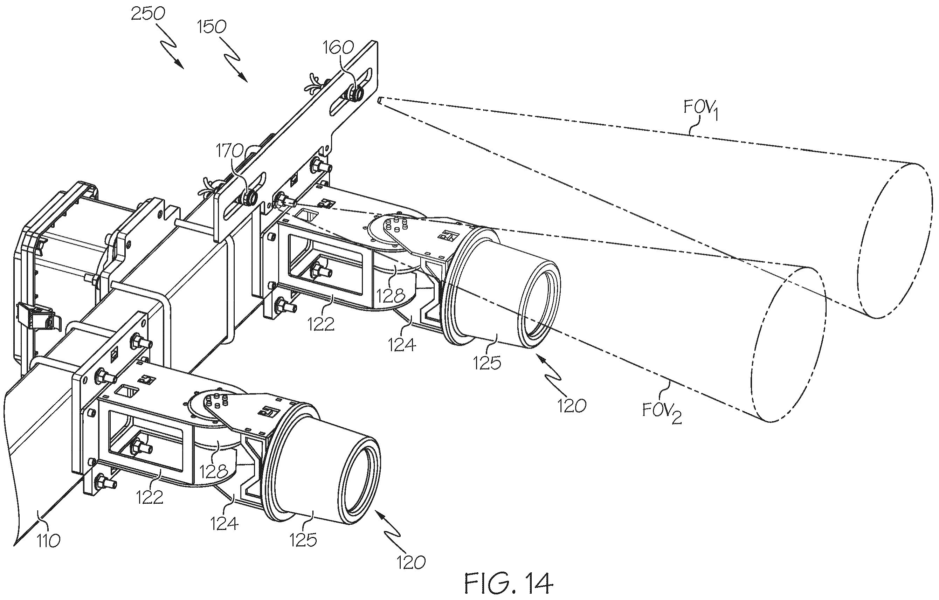

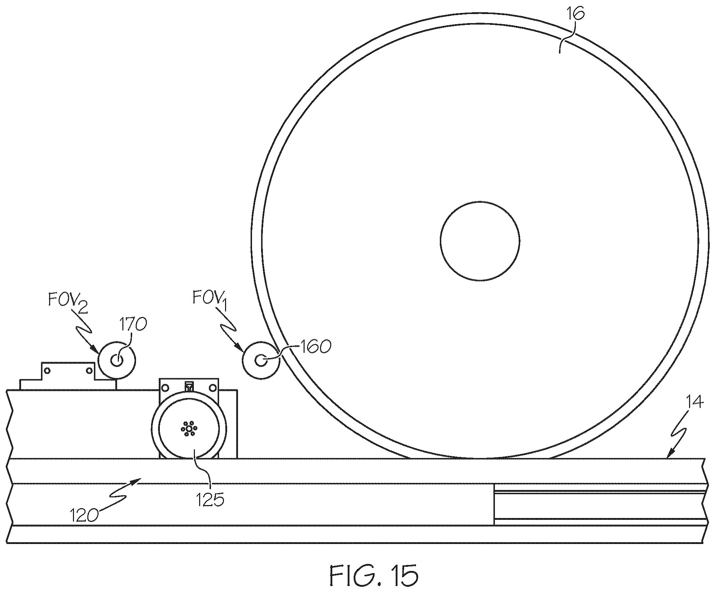

In order to initiate the actuation of the articulatable arms, the mobile platform may employ one or more sensors to detect the presence of a nearby wheel on the rail of the railway. For example, a sensor system 150 may include a first sensor 160 and a second sensor 170. The sensor system may mount to the frame on either side of the articulatable arm, e.g., on either side of the flanged wheel in the engaged position as shown in FIGS. 14-19. Each articulatable arm may have a dedicated sensor system. In any event, the first sensor that can detect, or sense, objects within a first field of view FOV1 and the second sensor is that can sense objects within a second field of view FOV2. The first sensor, the second sensor, and the actuator of the articulatable arm are in signal communication with each other, for example.

A suitable control circuit 180 (FIG. 20) may include a memory 182 and one or more processors 184 and may execute instructions stored in the memory. In one embodiment, the control circuit may be in signal communication with each of the sensor systems and with each of the actuators of the articulatable arms as shown in the schematic of FIG. 20. In one embodiment, the control circuit may be in signal communication with each of the sensor systems, with each of the actuators of the articulatable arms, and with the linear actuator. In such instances, the control circuit may receive and interpret sensor input, based at least in part on the sensor input may identify an obstacle, and may respond by selectively causing the linear actuator to move the frame to avoid an obstacle.

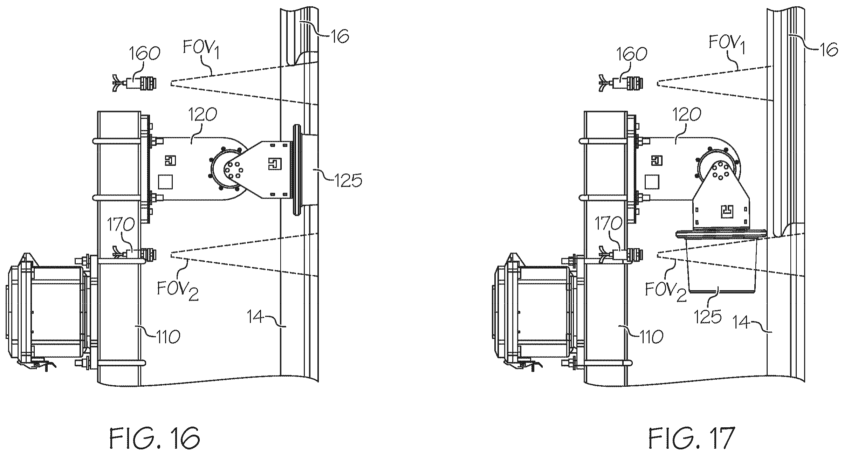

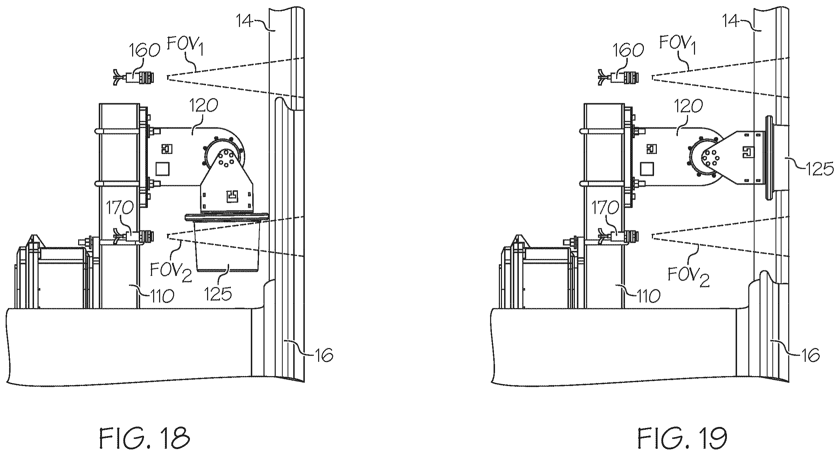

Referring to FIG. 16, when neither the first sensor nor the second sensor detects an obstruction, such as a wheel of a railcar in the path of a flanged wheel 125 of the mobile platform, the flanged wheel is in the engaged position. Referring to FIG. 17, when an object, such as the wheel of the railcar initially enters the first field of view FOV1 of the first sensor, the first sensor sends a signal to the control circuit which in turn actuates the actuator of the articulatable arm to move the flanged wheel from the engaged position to the disengaged position such that the flanged wheel disengages the rail of the railway and moves out of the path of the wheel 16 of the railcar. Further, after the first sensor initially detects the wheel, the second sensor is to detect the wheel upon further movement of the wheel along the rail of the railway and into the second field of view FOV2, as shown in FIG. 18. When the second sensor detects the wheel of the railcar after the first sensor, the second sensor sends a signal to the control circuit which in turn directs the actuator to maintain the flanged wheel in the engaged position. Upon the second sensor no longer detecting the wheel of the railcar within the second field of view FOV2, as shown in FIG. 19, the second sensor sends a signal to the control circuit which is that can actuate the actuator to transition the flanged wheel from the disengaged position to the engaged position to reengage the rail of the railway, as shown in FIG. 19.

In various aspects, the size of the first field of view FOV1 and the second field of view FOV2 are selected to give the flanged wheel ample time to be actuated out of the way of the wheel of the railcar upon the first sensor initially detecting the wheel 16 of the railcar, and selected to ensure that the wheel of the railcar is clear of the rotating path of the flange wheel 125 prior to transitioning the flanged wheel back into the engaged position to ensure the flanged wheel does not interfere with the wheel of the railcar passing by.

In instances where the second sensor is the first to detect an obstruction, such as the wheel of the railcar, the control circuit can move the flanged wheel out of the way of the wheel of the railcar in the same manner as described above, albeit in reverse due to the second sensor detecting the wheel of the railcar first. Moreover, the sensor system will work in a similar manner to initiate actuation of the flanged wheels when the mobile platform is moving along the railway and the wheels of the railcar on the railway rail are stationary. The sensor system will work in a similar manner to actuate the flanged wheels when both the mobile platform and the wheel of the railcar are moving along the railway.

In one embodiment, a single sensor may be used having a field of view that is large enough to initially detect the wheel within the field of view in order to give the flanged wheel of the mobile platform ample time to rotate to the disengaged position and to initiate the transition of the flanged wheel from the disengaged position back into the engaged position once the single sensor no longer detects the wheel of the railcar within its field of view.

In alternative embodiments, only a subset of the flanged wheels is associated with sensors, and the control circuit is that can perform a hybrid of time-based articulation decisions and sensor-based articulation decisions. The sensors can be limited to one or both of the flanged wheels at the front end of the vehicle Additionally, or alternatively, the sensors can be limited to one or both of the flanged wheels at the back end of the vehicle. The intermediate flanged wheels may lack direct sensor support. The control circuit may determine when to articulate the articulation arms to move the intermediate flanged wheels away from the rail based on the time from receipt of an input sensor associated with another flanged wheel (front/end) assuming a significant change in speed is not detected.

To ensure a sufficient number of engaged flanged wheels are available to support the vehicle on the rail of the railway, a control circuit (FIG. 20) may execute an articulation sequence or pattern. The control circuit may control the instance and direction of articulation of the articulation arms based on sensor input from a sensor system 150 (FIG. 20), the sensor input indicative of upcoming wheel interfaces, for example. In one aspect, the decision to articulate one of the articulation arms, for example in response to a sensor input, can be conditioned upon detecting a sufficient number of engaged flanged wheels, or articulation arms in unarticulated orientation, to support the mobile platform on the rail of the railway.

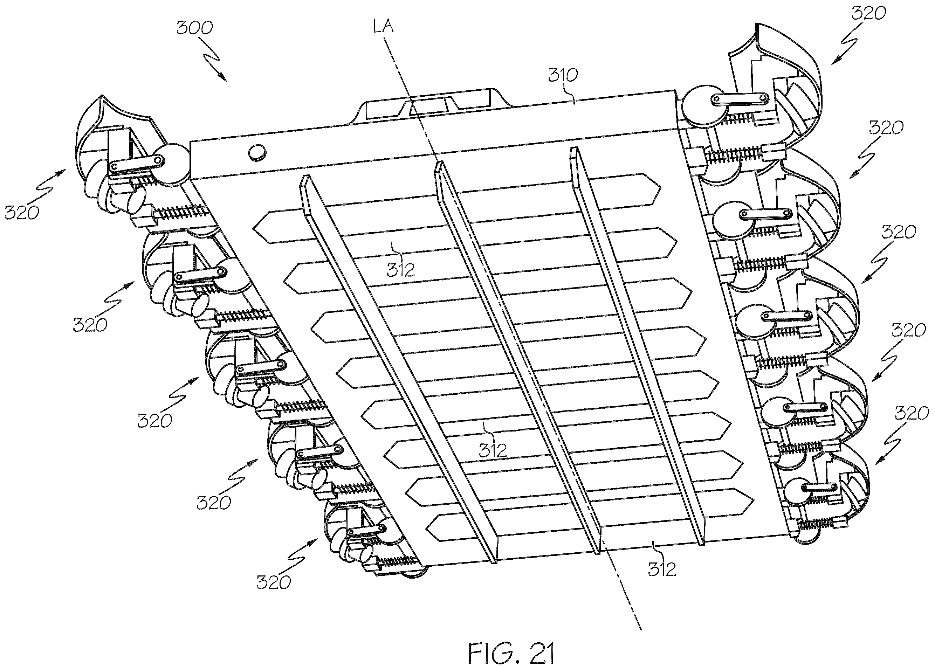

FIG. 21 illustrates a mobile platform 300 for travelling along a rail of a railway. The mobile platform in FIG. 21 is similar in some respects to the mobile platform shown in FIGS. 5 and 6 and is capable of traversing underneath of a rail vehicle and/or permitting a rail vehicle to traverse overtop it. The mobile platform may include a frame 310 and a plurality of connection elements, or actuatable arms 320 extending from the frame. The frame defines a lateral frame width that is less than the distance between a pair of rails of a railway, for example. In various aspects, the frame has cross bracing to provide rigidity to the frame. The cross bracing provides mounting locations for various railway maintenance components, as discussed in greater detail elsewhere herein.

The mobile platform may include ten actuatable arms with five actuatable arms positioned on either side of a longitudinal axis defined by the frame. In another embodiment, a mobile platform can include plural sets of arms. These sets may be directly opposed to each other in one embodiment and may be offset relative to each other in other embodiments.

In some instances, as shown in FIG. 21, each arm is positioned directly across from a corresponding arm on the other side of the frame. Alternatively, the actuatable arms on one side of the frame may be staggered relative to the arms on the other side of the frame. The actuatable arms may positioned in an alternating pattern or a zigzag pattern with respect to the frame.

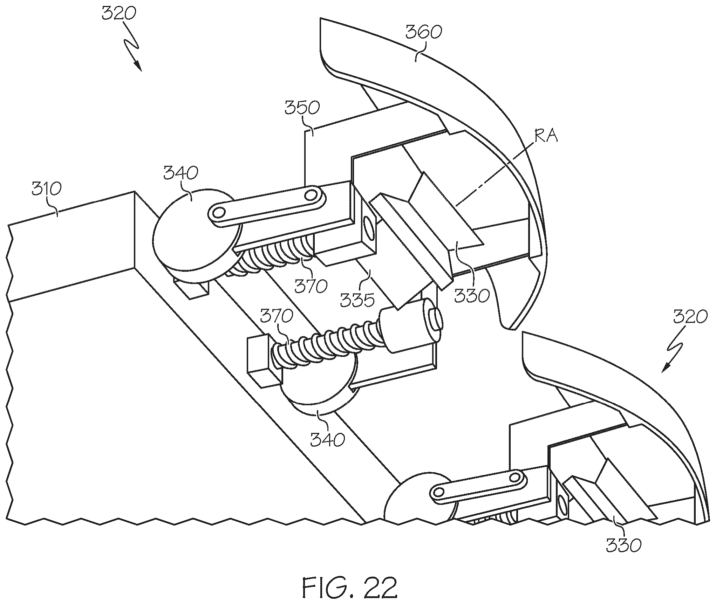

FIG. 22 illustrates an enlarged view of one of the actuatable arms of the mobile platform 300. Each actuatable arm may include a first connector 340 attached to the frame and a second connector 350 extending from the first connector and movable relative to the first connector. The actuatable arm further may include a support element, or flanged wheel 330, and a guide shoe 360 which are mounted to the second connector. Further, the actuatable arm may include a pair of compression springs 370 mounted between the first connector and the second connector. The actuatable arm further may include a direct drive motor 335 for actuating the flanged wheel relative to the frame about a rotation axis RA.

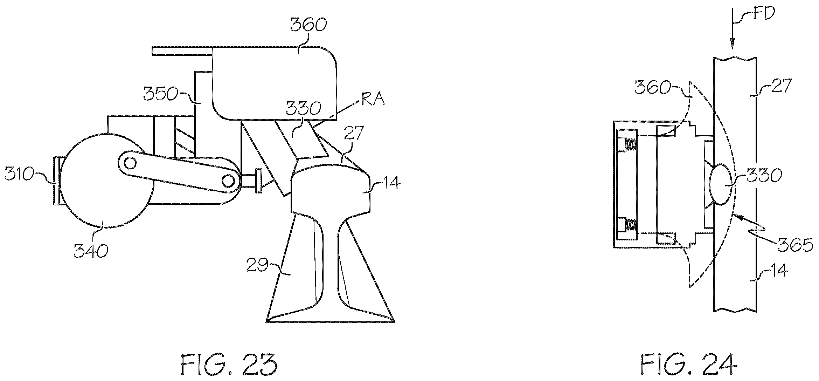

Referring primarily to FIGS. 23-28, In one embodiment, as the mobile platform approaches a wheel of a railcar from a first direction FD, each of the guide shoes of the actuatable arms are that can sequentially engage the wheel to move the flanged wheels and guide shoe out of the path of the wheel to permit the vehicle to pass along the rails of the railway underneath the railcar. The mobile platform may be stationary while the railcar moves toward and traverses the mobile platform. Alternatively, the railcar may be stationary while the mobile platform moves toward and traverses the railcar. Alternatively, the mobile platform and the railcar may both be moving along the rail of the railway in the same direction, or opposite directions, where one traverses the other.

Referring to FIGS. 23 and 24, when the guide shoe is not engaged with the wheel of the railcar, the actuatable arm is in a first configuration where the flanged wheel is engaged with the rail of the railway. In the engaged position, the flanged wheel is permitted to be rotated about its rotation axis by its respective motor to produce tractive effort onto the rail of the railway. As such, when the flanged wheel is in the engaged position, the mobile platform can be driven along the rails of the railway. In one embodiment, the biasing force of the compression springs biases the second connector away from the first connector and, thus, retains the flanged wheel in the engaged position.

Further to the above, in the illustrated embodiment, the flanged wheel rests on the top portion of the rail of the railway as shown in FIGS. 23 and 24. In an alternative embodiment, in the engaged position, the flanged wheel rests on the foot portion of the rail of the railway.

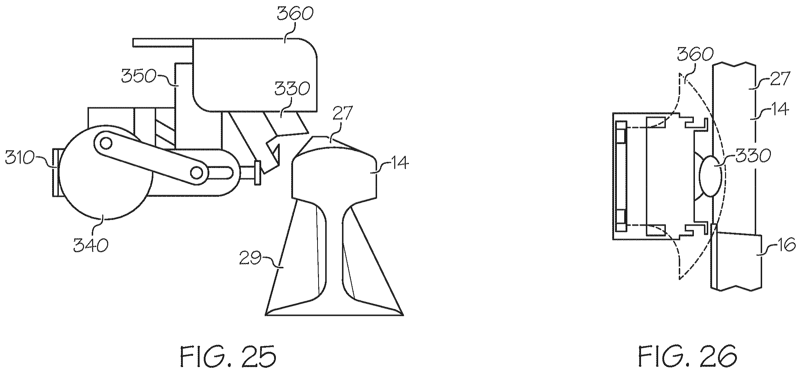

Further to the above, when the guide shoe and the wheel of the railcar initially engage one another, the actuatable arm is transitioned from the first configuration into a second configuration, as shown in FIGS. 25 and 26. As the guide shoe of the actuatable arm and the wheel of the railcar engage each other, the compression springs are compressed to permit the second connector and, thus, the flanged wheel to move away from the rail toward the frame of the vehicle and, thus, to disengage the rail.

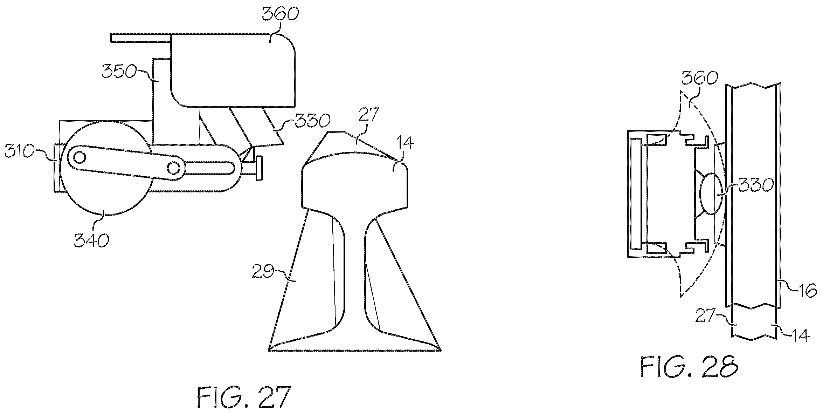

Further to the above, in response to relative movement between the actuatable arm and the wheel of the railcar, the guide shoe may be moved further away from the rail toward the frame of the mobile platform to retain the actuatable arm in the second configuration with the flanged wheel disengaged from the rail of the railway as shown in FIGS. 27 and 28. In one embodiment, the guide shoe may remain in contact with the wheel of the railcar until the wheel passes completely by the guide shoe. Upon the wheel of the railcar moving clear of the guide shoe, the compression springs transition the actuatable arm from the second configuration back into the first configuration to reengage the flanged wheel with the rail of the railway, i.e., the same configuration shown in FIGS. 23 and 24.

Referring still to FIGS. 23-28, in one embodiment, the guide shoe defines an arcuate outer surface 365 that permits the wheel of the railcar to gradually engage the guide shoe to transition the actuatable arm between the first configuration (FIG. 23) to the second configuration (FIG. 25). In one embodiment, the guide shoes of the mobile platform are replaceable. In any event, each of the guide shoes of the mobile platform are that can engage the wheel of the railcar to sequentially transition each actuatable arm, on both sides of the mobile platform, between the first configuration and the second configuration to permit the mobile platform to pass underneath the railcar.

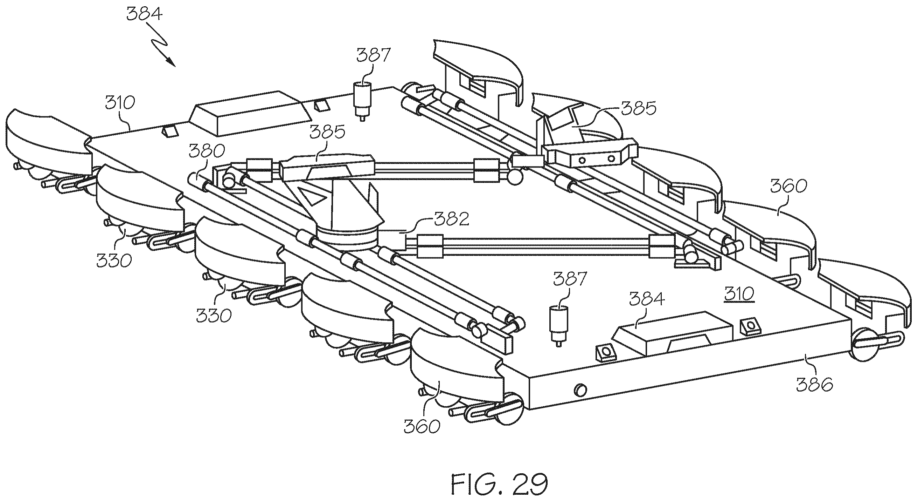

The following description discusses a number of components that can perform various maintenance and/or operational tasks while the mobile platform is underneath a railcar. As shown in FIG. 29, the mobile platform may include a plurality of manipulators 380 attached to the frame. Suitable manipulators can be high speed multi-axis manipulators that lay flat when the vehicle passes underneath of a railcar and then are that can be actuated to rise up to perform multiple tasks such as, for example, maintenance tasks including manipulating air valves. In one embodiment, the manipulators are used to connect air couplers. In one embodiment, the manipulators include belt driven linear actuators.

In various aspects, the manipulators may have an end effector attached thereto. The end effectors are that can perform operations and/or maintenance on railway cars and railway systems. Suitable end effectors may have one or more of an integrated yaw drive, a grip for air valve or air hose gladhand, a camera, lighting, a microphone, pressure sensors, replaceable grip pads, sweep rods, range finders, and the like, for example.

In one embodiment, the mobile platform further may include a microphone 382. The microphone may be attached to the frame portion. The microphone may be used to detect and to locate or pinpoint leaks in railcar air systems.

In one embodiment, the camera 384 may be a stereo camera. The stereo camera may have a first camera mounted at the front and a second camera mounted at the rear of the mobile platform. This arrangement may be suitable for navigation clearance sensing. In one embodiment, the mobile platform may include stereo cameras in the middle of the frame for imaging the underside of railcars, imaging railcar couplings, and/or imaging air valves. In one embodiment, additional cameras may be mounted to the manipulators for precision sensing. In one embodiment, the cameras are robust multimodal cameras that can provide 2D and 3D data for navigation and manipulation tasks. In one embodiment, the cameras can validate that there is open or free space for the mobile platform and the manipulators to move within.

In one embodiment, the mobile platform may include a light, such as an LED light attached to the frame. In one embodiment, the mobile platform may include one LED light mounted at the front and one mounted at the rear of the vehicle. In various aspect, the LED lighting is electrically synchronized with the cameras attached to the frame.

In one embodiment, the mobile platform may include a status light 387 for indicating the status of the mobile platform. For example, when the light is lit in a first color, the mobile platform may be in an error state and when the light is lit in a second color, the mobile platform may be in an autonomous state.

A suitable control circuit, or controller, may include an integrated circuit, a general-purpose computing device, one or more processers, a memory device (e.g., forms of random access memory), a communications device (e.g., a modem, blue-tooth, cellular communications, satellite device), a communications switch, or optical-electrical equipment.

In one embodiment, the control circuits, controllers, or systems described herein may have a local data collection system deployed and may use machine learning to enable derivation-based learning outcomes. The control circuits may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used making determinations, calculations, comparisons and behavior analytics, and the like.

In one embodiment, the control circuit may include a policy engine that may apply one or more policies. These policies may be based at least in part on characteristics of a given item of equipment or environment. With respect to control policies, a neural network can receive input of a number of environmental and task-related parameters. These parameters may include, for example, operational input regarding operating equipment, data from various sensors, location and/or position data, and the like. The neural network can be trained to generate an output based on these inputs, with the output representing an action or sequence of actions that the equipment or system should take to accomplish the goal of the operation. During operation of one embodiment, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the control circuit may use evolution strategies techniques to tune various parameters of the artificial neural network. The control circuits may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models is obtained, they may be evaluated on their performance using a determined success metric. The best model is selected, and the vehicle control circuit executes that plan to achieve the desired input data to mirror the predicted best outcome scenario. Additionally, the success metric may be a combination of the optimized outcomes, which may be weighed relative to each other.

In one or more embodiments, the mobile platform includes the frame and drive wheels (e.g., the flanged wheels) that support the frame. The drive wheels propel the mobile platform on the rails without contacting other vehicles such as railcars that travel along the same path in the same direction, in the opposite direction, or while either the mobile platform 200 or the other vehicle is stationary. The mobile platform further includes an energy storage device supported by the frame, and an energy interface device configured to transfer energy to and/or from the energy storage device and an offboard energy device.

In one or more embodiments, the mobile platform may include articulatable arms extending from the frame and supporting the drive wheels. The articulatable arms may be selectively transitionable between first orientations and second orientations, and the drive wheels may be engageable with rails that support a rail vehicle having wheel pairs. In the first orientations, the drive wheels are engaged with the rails to support the frame. In the second orientations, the drive wheels are disengaged from the rails. In one embodiment, the drive wheels retract and extend to switch between the first and second orientations. In another embodiment, the drive wheels rotate/pivot between the first and second orientations.

In one or more embodiments, the path may be defined by rail tracks, the other vehicles may include a rail vehicle, and the mobile platform is configured to pass underneath the rail vehicle that is on the rail tracks.

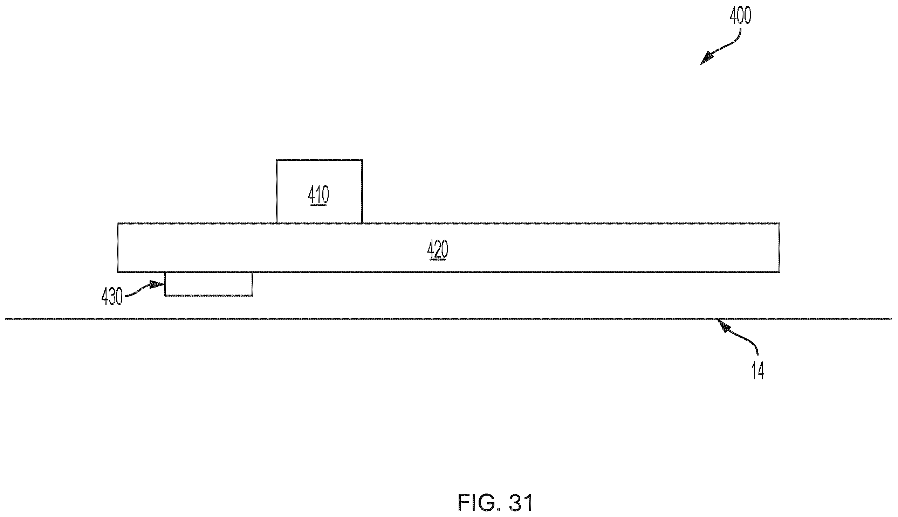

Referring to FIG. 31, the mobile platform may further include an energy storage device 410 supported by the frame. The energy storage device may store energy as chemical energy (for example, in a dry cell or wet cell battery), mechanical energy (for example, in a gyroscope or a spring), electrical energy (for example, in a supercapacitor), thermal energy (for example, in a thermal battery), and/or any other suitable form of energy storage. In one embodiment, the energy storage device may be an energy source such as a solar collector or an internal combustion engine, for example. In one embodiment, the energy storage device may be rechargeable or replaceable.

The energy storage device may be housed on the frame, within the frame, or under the frame. A suitable casing may be utilized to protect the energy storage for environmental changes and/or tampering.

The mobile platform may further include an energy interface device 430 that is also supported by the frame. The energy interface device may transfer energy to and/or from the energy storage device and an offboard energy device. The energy interface device may be located in any one of a number positions on the mobile platform in consideration of the placement of the offboard energy device. As shown in FIG. 31, the energy interface device may extend underneath the frame. In other embodiments, the energy interface device may be above, at the front of, to the rear of, or to either side of the frame. In some embodiments, the mobile platform may include a plurality of energy interface devices to enable the mobile platform to service a variety of offboard energy devices.

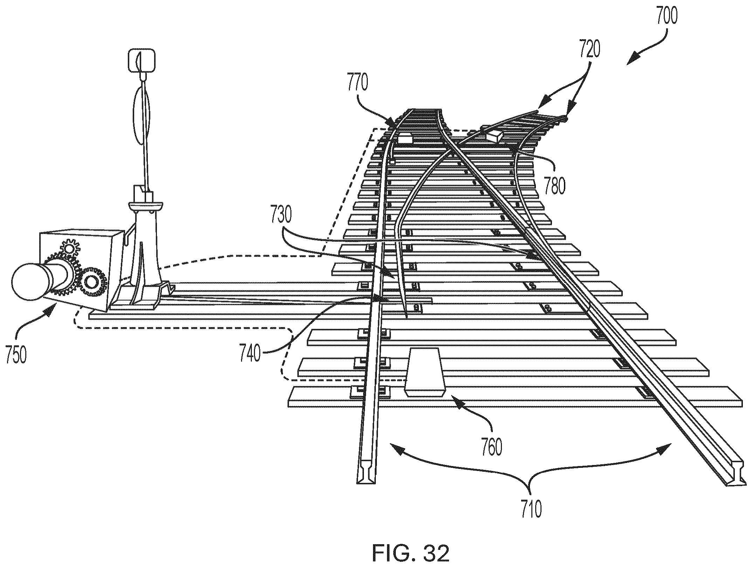

In one or more embodiments, the mobile platform may be used to energize an automatic switch. Referring to FIG. 32, a switch 700 includes a first pair of rails 710 and a second pair of rails 720 that provides an alternate route for a railcar, a locomotive, a train, and the like. A pair of switch rails 730 are used to control whether rail traffic remains on the first set of rails 710 or moves to the second set of rails 720. The switch rails 730 are moved by a pull rod 740. In manual switching, a human throws a switch. An automated switch uses a switch motor 750 to actuate the switch. In some locations, electric energy is not readily available for reasons discussed above. The mobile platform may travel on the rails to the switch without contacting other vehicles that travel along the same path in the same direction, in the opposite direction, or while one of the mobile platform or the other vehicle is stationary, and may transfer energy to the switch.

Energy from the energy storage device of the mobile platform may be transferred to the switch via the energy interface device. A motor power connection 760 may reside on the switch side near the rails and on, in, above, or near the ground (or, here, the rail bed). In one or more embodiments, there may be more than one motor power connection 770, 780, for example at each terminus of the switch. Some switch systems may also include an energy storage device. In such circumstances, energy may be transferred to and/or from the energy storage device on the mobile platform and the energy storage device of the switch system.

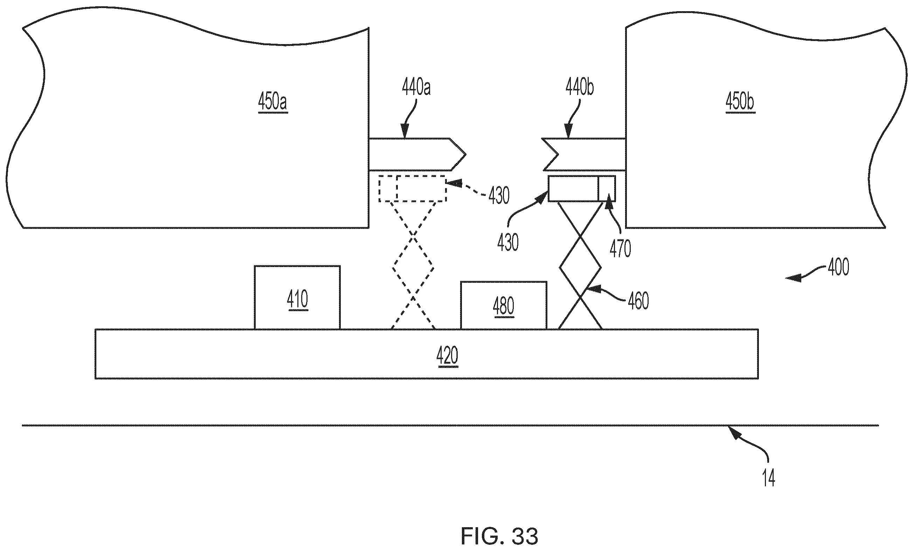

Referring to FIG. 33, in one or more embodiments, the offboard energy device includes an automatic coupler. As illustrated in FIG. 33, each of two adjacent rail vehicles 450a, 450b include an automatic coupler 440a, 440b, respectively. The mobile platform may travel underneath the adjacent rail vehicles to a position, as illustrated in FIG. 33, suitable for the energy transfer device to reach the automatic couplers. The energy transfer device may then be extended from the frame to engage and transfer energy to the automatic couplers.

The mobile platform may include one or more arms 460 coupled to the energy interface device, and movable to position the energy interface device for energy transfer from the energy storage device to the offboard energy device. The one or more arms may support and position the energy transfer device against the automatic coupler to energize the automatic coupler to actuate a coupler mechanism to couple the two rail vehicles 450a, 450b together. Additionally, or alternatively, the energy transfer device may transfer energy to the automatic coupler to uncouple the two rail vehicles.

In one embodiment, the energy transfer device may simultaneously engage automatic couplers associated with two adjacent vehicles for coupling and/or decoupling. Alternatively, a second energy transfer device (shown with dashed lines) may transfer energy to the second automatic coupler. In some cases, one or both adjacent rail vehicles may include an energy storage device such as a battery. In such instances, the energy transfer may occur between the energy storage device of the mobile platform and the energy storage device of the rail vehicle.

In one or more embodiments, the mobile platform is configured to transfer energy to a rail vehicle that has insufficient energy (for example, a "dead battery") to perform one or more functions.

In one or more embodiments, the mobile platform may temporarily provide energy to offboard energy devices that normally have no power or low power. Such offboard energy devices may include transmitters, receivers, transceivers, global navigation systems (for example, the Global Position System (GPS)), and the like. In such cases, the offboard energy device would be energized long enough to perform the functions before returning to a no-power or low-power state. In one example, a non-powered GPS device can be energized by the mobile platform, allowing the GPS device to determine its location and report its position to a host server before returning to a no-power state once the mobile platform moves on.

In one or more embodiments, the energy transfer device of the mobile platform establishes electrical connectivity with the offboard energy device through either direct physical contact or wireless energy transmission methods. The device may include conductive interfaces for physical coupling, or employ inductive coupling, resonant energy transfer, or other wireless power transmission technologies to facilitate energy transfer to the offboard energy device without the need for direct contact.

In one or more embodiments, the mobile platform may further include a control circuit 480 and one or more sensors 470 including one or more proximity sensors, contact sensors, alignment sensors, or electrical continuity sensors, for example. The control circuit may detect a successful or unsuccessful coupling or uncoupling between the energy interface device and the offboard energy device based on sensor data from the one or more sensors.

The control circuit may transmit a communication signal to a rail vehicle system responsible for positioning one or more adjacent rail vehicles for coupling operations. This communication signal may be generated based on real-time data inputs, such as the position, alignment, and proximity of the rail vehicles. Upon detecting that the adjacent vehicles are in the proper alignment or within a predefined range for coupling, the control circuit initiates the signal, which may be transmitted wirelessly or via wired communication protocols to the rail vehicle control system. This ensures precise coordination between the mobile platform and the rail vehicle, facilitating the accurate movement and positioning of railcars for coupling. The communication protocol used may include industry-standard interfaces such as CAN bus, Ethernet, or other rail-specific protocols to ensure reliable and synchronized operations within the rail yard.

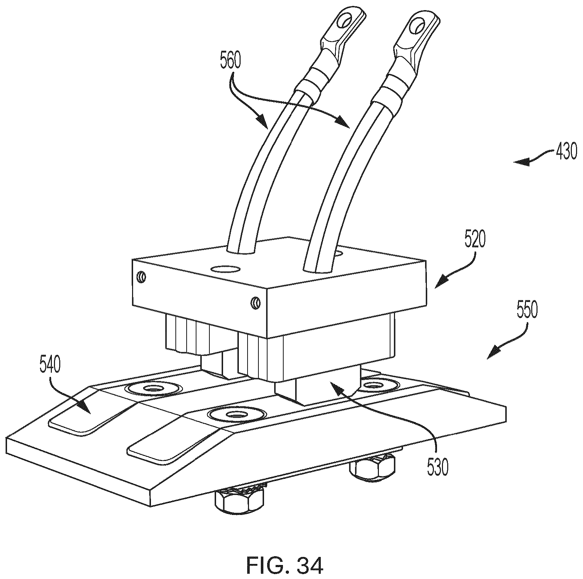

FIG. 34 illustrates an embodiment of the energy interface device that establishes electrical contact with an offboard energy device. The energy interface device is implemented as a charging contact shoe 520. The charging contact shoe features a pair of electrical contacts 530 designed to engage with a corresponding pair of electrical contacts 540 located on a charging contact plate 550. The specific number of electrical contacts can vary based on the system's energy transfer requirements and design specifications. The electrical contacts of the charging contact shoe are connected to the mobile platform's energy storage device via conductors 560, such as electrical leads or wires. These conductors form a pathway for the electrical energy to flow from the charging contact plate to the mobile platform's energy storage system, ensuring efficient energy transfer.

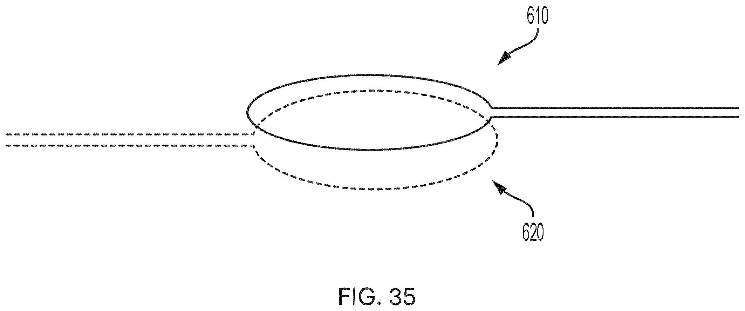

FIG. 35 illustrates an alternative embodiment where electrical energy is transferred without direct physical contact between the energy interface device and the offboard energy source. In this configuration, energy transfer is achieved through wireless mechanisms, such as capacitive or inductive coupling, depending on the system design. For inductive coupling, two coils of conductive wire 610 and 612 are used. When an alternating current (AC) flows through the first coil 610, it generates a changing magnetic field, which in turn induces an alternating current in the second coil 620. This method enables energy transfer across an air gap or insulating material, providing a contactless solution for power transfer.

In one or more embodiments, the mobile platform include a control circuit that monitors a parameter indicative of an energy level of the energy storage device, and return the mobile platform to a recharging station based on the monitored parameter and a set threshold. These parameters may include, but are not limited to, voltage, current, state of charge (SoC), or other battery health metrics. The control circuit is programmed to autonomously determine when the energy storage device reaches a predefined threshold, triggering the mobile platform to return to a designated recharging station for replenishment. The threshold can be configured based on operational requirements to optimize efficiency and ensure continuous operation.

The recharging station may be located at a fixed position, providing a dedicated docking area where the mobile platform can engage with an offboard energy device for recharging. In alternative embodiments, the recharging station may be mobile and associated with a locomotive, such as a shunt locomotive operating within a rail switching yard. The mobile platform may be programmed to coordinate its operations with the locomotive, executing tasks in synchronization with or under the guidance of the shunt locomotive, a locomotive operator, or other crew members working in the yard. This coordination ensures seamless integration of the mobile platform into the workflow of the switching yard, enabling efficient energy management and operational autonomy.

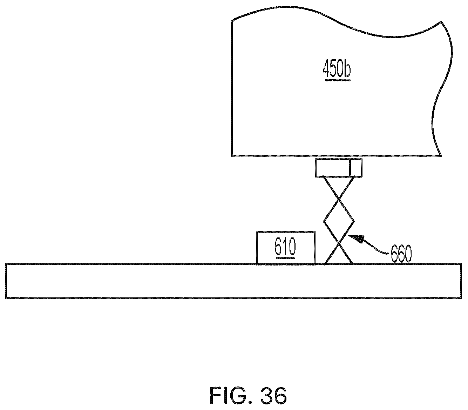

In one or more embodiments, as illustrated in FIG. 36, the mobile platform can be utilized in positioning rail vehicles within a yard, for example. The mobile platform may include an energy source 610 supported by the frame and an engagement device 660 extendable to engage a stationary rail vehicle. The control circuit may actuate the engagement device to engage the stationary rail vehicle and to energize the drive wheels of the mobile platform to cause the rail vehicle to move in a desired direction.

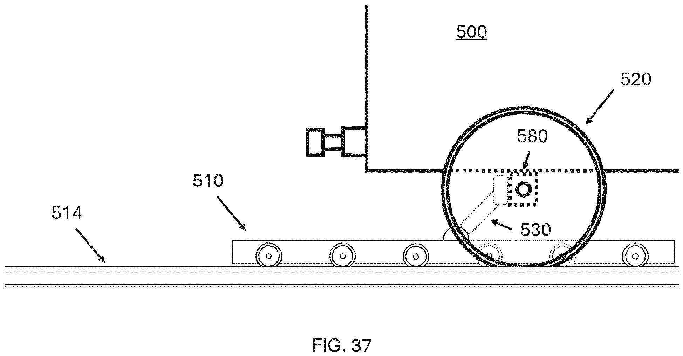

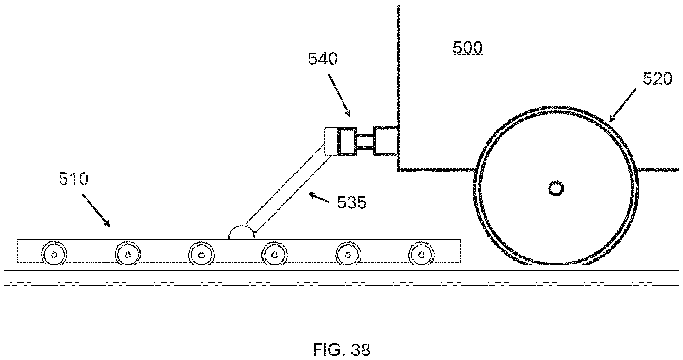

Referring to FIGS. 37 and 38, a mobile platform 510 may extend a push bar or arm 530 to make contact with a railcar 500. The push bar or arm 530, 535 may make contact at a rigid connection point on the railcar 500, for example, a coupler 540, an axle 580 of railcar wheel 520, a crossbeam, and the like. Using the drive wheel tractive force of the mobile platform 510, the railcar may be pushed (or pulled, depending on the type of connection made between the push bar/arm and the railcar) along the rails 514 of the track. In one or more embodiments, the mobile platform may include one or more clamps to clamp to one or more rails 514 to secure the mobile platform against slippage. These embodiments may allow a mobile platform to move railcars around a switching yard as well as in other locations.

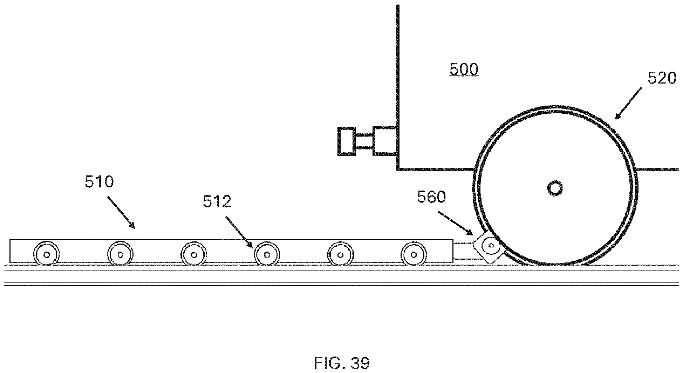

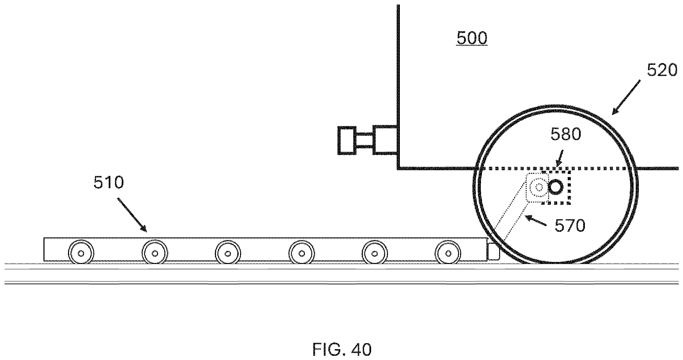

Referring to FIG. 39 and 40, a mobile platform 510 may include an ancillary motor 560 that can be used to mobilize a railcar 500. The ancillary motor 560 may drive a railcar wheel 520, axle 580, or similar rotatable part, causing the railcar 500 to move along a track 514. The ancillary motor may directly or indirectly engage the wheel or axle. Depending on how long the mobile platform 510 is required to energize motion of the railcar 500, the drive wheels 512 of the mobile platform may also need to be engaged to allow rotational energy to be provided to the wheels of the railcar as it moves along the rails.

Further, the engagement device may be configured to engage a second rail vehicle. The control circuit may then energize the drive wheels of the mobile platform to cause the second rail vehicle to move to a second set position adjacent the first rail vehicle.

The foregoing description presents various embodiments of systems and processes through block diagrams, flowcharts, and examples. Each of the depicted components, functions, or operations may be implemented using hardware, software, firmware, or combinations thereof. Specific features can be executed using integrated circuits, computer programs, or processors (e.g., microprocessors, microcontrollers), as well as other software-hardware combinations. The design and development of such implementations, whether via circuitry or software, are within the technical expertise of those skilled in the art. Moreover, the described methods and mechanisms may be distributed as program products on various media, with no restriction on the format of the medium.

Instructions for implementing these features can be stored in various types of memory, including dynamic random-access memory (DRAM), flash memory, and/or cache. These instructions can also be distributed over a network or via other computer-readable media. The term "non-transitory computer-readable medium" refers to any physical medium capable of storing or transmitting instructions or information that can be read by a machine. Examples include, but are not limited to, optical disks, CD-ROMs, RAM, ROM, EPROM, EEPROM, magnetic or optical cards, flash memory, or even propagated signals such as carrier waves or infrared signals.
software components described herein may be implemented using languages such as Python, Java, C++, or Perl. The corresponding software code may be stored on various computer-readable media, such as RAM, ROM, hard drives, or CD-ROMs. These media may be part of a single computational device or distributed across multiple devices within a networked system.

The term "control circuit" encompasses hardwired circuitry, programmable logic (such as microprocessors, microcontrollers, digital signal processors (DSPs), programmable logic devices (PLDs), programmable gate arrays (PGAs), or field-programmable gate arrays (FPGAs)), state machines, or firmware that executes stored instructions. Control circuits may form part of larger systems, such as integrated circuits (ICs), application-specific integrated circuits (ASICs), or systems -on -chips (SoCs), and are commonly found in devices such as computers, smartphones, and servers. These circuits may perform tasks involving data processing, communication, or data storage.

In some embodiments, the control circuit can utilize machine learning (ML) techniques to make decisions based on sensor inputs or other data. ML methods may include supervised learning (with labeled inputs and outputs), unsupervised learning (for identifying patterns), or reinforcement learning (where the system adapts based on feedback). tasks for ML systems may involve classification, regression, clustering, anomaly detection, or optimization, with algorithms such as decision trees, deep learning, support vector machines (SVMs), or neural networks being employed, depending on the application.

A control circuit may also incorporate a policy engine that applies specific rules based on equipment characteristics or environmental conditions. For instance, a neural network could process sensor data or operational inputs to determine appropriate actions. techniques such as backpropagation or evolutionary strategies may be used to refine neural network parameters and optimize model selection for the given task.

The system may handle data generation, transmission, and storage, potentially leveraging both protected and exposed data sources. Encryption and decryption can be applied during data transit, at rest, or in use, with keys and schemas determined based on operational needs. The control circuit may monitor and enforce decision boundaries, ensuring that data from protected sources meets safety or operational thresholds. If data breaches these boundaries, the system may initiate actions such as equipment shutdown, component isolation, or transitioning to safe mode to mitigate potential risks or damages.

The term "logic" refers to software, firmware, and/or circuitry configured to execute the described operations. Logic may be implemented as applications, software packages, instruction sets, or data stored on non-transitory computer-readable storage media. Firmware may be hard-coded into memory devices. Components and modules described herein may be hardware, software, or a combination thereof, and may be in active, inactive, or standby states depending on system requirements.

An "algorithm" refers to a sequence of steps designed to achieve a specific result. These steps may manipulate physical quantities, typically in the form of electrical or magnetic signals, which are represented as bits, values, symbols, or numbers. The terms used to describe these processes are labels for the underlying physical operations.

The system may operate over a packet-switched network using various communication protocols, including Ethernet (complying with IEEE 802.3 standards), X.25, frame relay, or Asynchronous Transfer Mode (ATM). Communication between devices may follow established protocols such as TCP/IP or new emerging standards.

Terms such as "processing," "computing," "calculating," or "determining" refer to operations carried out by computing systems or electronic devices, which manipulate data represented as physical (electronic) quantities within memory or registers.

Terms like "component," "system," and "module" refer to computer-related entities, whether hardware, software, or a combination thereof. One or more components may be described as "configured to," "configurable to," "operable/operative to," "adapted/adaptable to," or similar terms. Unless explicitly stated, these terms encompass components in both active and inactive states.

In one embodiment, the control circuit, controller, and systems described herein may use machine learning to make determinations and to enable derivation-based learning outcomes. The system may communicate with a data collection system. The control circuit may learn from, model and make decisions/determinations on a set of data (including data provided by various sensors and data collection systems) by making data-driven predictions and adapting according to available data and modeling. Machine learning may involve performing tasks using supervised learning, unsupervised learning, and reinforcement learning systems. Supervised learning may use a set of example inputs and desired outputs to the machine learning systems, where unsupervised learning may use a learning algorithm that is structuring its input with, e.g., pattern detection and/or feature learning. Reinforcement learning may perform in a dynamic environment and then provide feedback about correct and incorrect decisions. Machine learning may include tasks based on certain outputs. These tasks may be machine learning problems such as classification, regression, clustering, density estimation, dimensionality reduction, anomaly detection, and the like to include other mathematical and statistical techniques. Suitable machine learning algorithmic types may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for making determinations, calculations, comparisons and behavior analytics, and the like.

In one embodiment, the control circuit may include a policy engine. The policies the engine may apply can be based at least in part on characteristics of a given item of equipment or environment. For example, an artificial intelligence system, such as a neural network, can receive input of a number of environmental and task-related parameters. These parameters may include, for example, operational input of the given equipment, data from various sensors, environmental information, location and/or position data, and the like. The neural network can be trained and can generate an output based on these inputs, with the output representing an action or sequence of actions that the equipment or system should take to accomplish the goal of the operation. The control circuit can process the inputs through the parameters of the neural network to generate a value (i.e., make a determination) at the output node designating that action as the desired action, activity, or operating state. An action may translate into a signal that causes the vehicle to operate in a particular manner. The control circuit may accomplish this via back-propagation, feed forward processes, closed loop feedback, or open loop feedback, for example. Alternatively, rather than using backpropagation, the control circuit may use evolution strategies techniques to tune various parameters of the neural network. The control circuit may use neural network architectures that have a set of parameters representing weights of its node connections. A number of copies of this network can be generated and adjustments to the parameters can be made with subsequent simulations. Once the outputs from the various models have been obtained, they may be evaluated on their performance using a determined success metric. The best model is selected, and the control circuit can execute that plan to achieve the desired input data to mirror the predicted best outcome scenario. Additionally, the success metric itself may be a combination of the optimized outcomes, which may be weighed relative to each other. Success metrics may be dynamically established, and the process rerun and the equipment directions further modified.

In one embodiment, data can be generated, transmitted, and stored and may involve one or both of a protected space data source and the exposed space data source. The control circuit may encrypt and decrypt data as needed at rest, during use, or in transit. Encryption keys and schema may be selected and implemented as informed by end use parameters and requirements. The control circuit may evaluate and/or identify a decision boundary (that is, a boundary that separates desired behavior from undesired behavior) with regard to that data. If the control circuit determines that some quantity of data is from a protected space data source and/or is operating within determined boundaries then the control circuit, and the equipment being controlled, may operate normally. However, if the data is determined to be from an exposed space data source and/or it crosses the decision boundary, the control circuit may respond. Suitable responses may be to power down determined equipment, signal an alert, run a diagnostic routine, perform a data backup (without overwriting existing backup data), isolate equipment (including by suspending some or all communication pathways), switch equipment or control operations to a safe mode of the control system, and/or initiate a safe mode state of the equipment (e.g., slow a vehicle to a safe and controlled stop). The safe mode may be, in one embodiment, a soft shutdown mode that it intended to avoid damage or injury based on the shutdown itself and in another embodiment may be a reboot and/or minimal reload of essential drivers and functionality.

Unless stated otherwise, terms like "including" or "having" should be interpreted as open-ended (i.e., "including but not limited to"). Numeric claim recitations generally mean "at least" the stated number, and disjunctive terms like "A or B" should be interpreted to include either or both unless explicitly specified. Operations in any claim may generally be performed in any order unless explicitly stated. The recitation "at least one of A, B, and C" should be interpreted as any combination of A, B, and C, such A alone, B alone, C alone, A and B together, A and C together, B and C together, and/or A, B, and C together. The recitation "at least one of A, B, or C" should be interpreted to include A alone, B alone, C alone, A and B together, A and C together, B and C together, and/or A, B, and C together.

In summary, various embodiments have been described to illustrate the principles and applications of the disclosed systems and methods. These descriptions are not intended to limit the scope of the invention, and variations may be made by those skilled in the art. The accompanying claims define the invention's broadest legal scope within its spirit and scope.

Use of phrases such as "one or more of ... and," "one or more of ... or," "at least one of ...and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the examples, including the best mode, and to enable a person of ordinary skill in the art to practice the examples, including making and using any devices or systems and performing any incorporated methods. The claims define the patentable scope of the disclosure and include other examples that occur to those of ordinary skill in the art. Such other examples are within the scope of the claims if they have structural elements that do not differ from the literal language of the claims, or if they include equivalent structural elements with insubstantial differences from the literal language of the claims.

## Claims

1. A mobile platform, comprising:
a frame;
drive wheels supporting the frame that propel the mobile platform on rails along a path without contacting other vehicles that travel along the same path in the same direction, in the opposite direction, or while one of the mobile platform or the other vehicle is stationary;
an energy storage device supported by the frame; and
an energy interface device configured to transfer energy to and/or from the energy storage device and an offboard energy device.

2. The mobile platform of claim 1, wherein the offboard energy device is an automatic coupler, and the transfer energy is sufficient to energize the offboard energy device to actuate a coupler mechanism to couple two rail vehicles together, or to uncouple them.

3. The mobile platform of Claim 2, further comprising:
one or more sensors; and
a control circuit configured to detect a successful or unsuccessful coupling or uncoupling between the energy interface device and the offboard energy device based on sensor data from the one or more sensors.

4. The mobile platform of Claim 1, wherein the offboard energy device includes an automatic switch operably connected to a railroad switch, and the transfer energy is sufficient to energize the offboard energy device to actuate the automatic switch to change the state of the railroad switch.

5. The mobile platform of Claim 1, wherein the path is defined by rail tracks, and the other vehicles include a rail vehicle, and the mobile platform is configured to pass underneath the rail vehicle that is on the rail tracks.

6. The mobile platform of Claim 1, further comprising a plurality of pairs of drive wheels, each pair of drive wheels selectively transitionable between first orientations and second orientations, and the drive wheels being engageable with rails that are configured to support a rail vehicle having wheel pairs, and in the first orientations the drive wheels are engaged with the rails to support the frame, and in the second orientations the drive wheels are disengaged from the rails.

7. The mobile platform of Claim 1, wherein the mobile platform further comprises at least one arm configured to position the energy interface device to allow transfer of energy from the energy storage device to the offboard energy device.

8. The mobile platform of Claim 1, wherein the energy interface device is configured to at least one of make electric contact with the offboard energy device, or wirelessly provide energy to the offboard energy device.

9. The mobile platform of Claim 8, wherein the energy interface device comprises an inductive coupler configured to connect inductively to a complementary inductive coupler of the offboard energy device.

10. The mobile platform of Claim 1, further comprising a control circuit configured to:
monitor a parameter indicative of an energy level of the energy storage device; and
return the mobile platform to a recharging station based on the monitored parameter and a set threshold.

11. A system, comprising:
a mobile platform having a frame, and drive wheels supporting the frame that propel the mobile platform on rails along a path without contacting rail vehicles that travel along the same path in the same direction, in the opposite direction, or one of the mobile platform or the other vehicle is stationary;
an energy source supported by the frame; and
an energy interface device configured to transfer energy from the energy source to an automatic coupler device that is configured to couple and/or uncouple adjacent rail vehicles when energized via the energy source.

12. The system of Claim 11, wherein the path is defined by rail tracks, the other vehicles include a rail vehicle, and the mobile platform is configured to pass underneath the rail vehicle that is on the rail tracks.

13. The system of Claim 11, wherein the mobile platform further comprises a plurality of pairs of drive wheels, each pair of drive wheels selectively transitionable between first orientations and second orientations, and the drive wheels being engageable with rails that are configured to support a rail vehicle having wheel pairs, and in the first orientations the drive wheels are engaged with the rails to support the frame, and in the second orientations the drive wheels are disengaged from the rails.

14. The system of Claim 11, wherein the energy interface device is configured to at least one of make electric contact with the automatic coupler or wirelessly provide power to the automatic coupler; and
energize the automatic coupler to engage or to disengage the automatic coupler, and thereby to couple or uncouple the adjacent rail vehicles.

15. The system of Claim 14, further comprising:
one or more sensors; and
a control circuit configured to determine whether the coupling or uncoupling of the adjacent rail vehicles is successful based on sensor data from the one or more sensors.

16. The system of Claim 15, wherein the control circuit is further configured to output a communication signal to a rail vehicle associated with moving at least one of the adjacent rail vehicles into position for coupling.

17. A system, comprising:
a mobile platform having a frame, and drive wheels supporting the frame that propel the mobile platform on rails along a path without contacting rail vehicles that travel along the same path;
a energy source; and
an engagement device configured to engage a rail vehicle;
a control circuit configured to actuate the engagement device to engage the rail vehicle and to cause the rail vehicle to move in a desired direction.

18. The system of Claim 17, wherein the mobile platform is configured to pass underneath the rail vehicle that is on the rails.

19. The system of Claim 17, further comprising a plurality of pairs of drive wheels, each pair of drive wheels selectively transitionable between first orientations and second orientations, and the drive wheels being engageable with rails that are configured to support a rail vehicle having wheel pairs, and in the first orientations the drive wheels are engaged with the rails to support the frame, and in the second orientations the drive wheels are disengaged from the rails.

20. The system of Claim 17, wherein the mobile platform comprises:
one or more sensors; and
a control circuit configured to detect a successful or unsuccessful engagement between the engagement device and the rail vehicle based on sensor data from the one or more sensors.

21. The system of Claim 17, wherein the engagement device further comprises:
a push bar configured to make contact with a rigid connection point on the rail vehicle or an ancillary motor configured to drive a wheel and/or axle of the rail vehicle when energized, and
wherein the mobile device is kept from slipping by drive wheel tractive force or by a clamp configured to clamp a rail.

22. The mobile platform of Claim 4, wherein:
the energy interface device comprises a charging contact shoe,
the offboard energy device further comprises at least one charging contact plate configured to mate electrically with the charging contact shoe, and
each of the at least one charging contact plates is located at a terminus of the railroad switch.
